(19) Europäisches Patentamt
European Patent Office
Office européen des brevets

(11) **EP 3 045 220 B1**

(12) **EUROPEAN PATENT SPECIFICATION**

(45) Date of publication and mention
of the grant of the patent:
**09.05.2018 Bulletin 2018/19**

(21) Application number: **15783949.9**

(22) Date of filing: **17.06.2015**

(51) Int Cl.:
*B01D 53/86* (2006.01)     *B01J 23/10* (2006.01)
*B01J 23/22* (2006.01)     *B01J 23/28* (2006.01)
*B01J 23/30* (2006.01)     *B01J 23/34* (2006.01)
*B01J 23/652* (2006.01)     *B01J 23/75* (2006.01)
*B01J 23/755* (2006.01)     *B01J 29/076* (2006.01)

(86) International application number:
**PCT/JP2015/067449**

(87) International publication number:
**WO 2016/072110 (12.05.2016 Gazette 2016/19)**

(54) **EXHAUST GAS TREATMENT METHOD AND DENITRIFICATION/SO3 REDUCTION APPARATUS**

ABGASBEHANDLUNGSVERFAHREN UND
DENITRIFIKATIONS-/SO3-REDUKTIONSVORRICHTUNG

PROCÉDÉ DE TRAITEMENT DE GAZ D'ÉCHAPPEMENT ET APPAREIL DE
DÉNITRIFICATION/RÉDUCTION DE SO3

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2014 JP 2014227577**

(43) Date of publication of application:
**20.07.2016 Bulletin 2016/29**

(73) Proprietor: **Mitsubishi Heavy Industries, Ltd.
Tokyo 108-8215 (JP)**

(72) Inventors:
• **HIGASHINO, Koji**
**Tokyo 108-8215 (JP)**
• **SAWATA, Akihiro**
**Tokyo 108-8215 (JP)**
• **FUJIKAWA, Keiji**
**Tokyo 108-8215 (JP)**
• **YONEMURA, Masanao**
**Tokyo 108-8215 (JP)**

(74) Representative: **Henkel, Breuer & Partner
Patentanwälte
Maximiliansplatz 21
80333 München (DE)**

(56) References cited:
EP-A1- 1 452 222       EP-A1- 3 031 514
EP-A2- 0 786 285       DE-A1- 2 811 788
DE-A1- 3 438 367       JP-A- H0 884 912
JP-A- H05 220 348       JP-A- H07 227 523
JP-A- H10 128 064       JP-A- H10 225 620
JP-A- S49 133 269       JP-A- 2005 118 687
JP-A- 2005 279 372       US-A- 4 221 768
US-A1- 2014 018 231

**Description**

TECHNICAL FIELD

The present invention relates to a flue gas treatment method and to a denitration and $SO_3$ reduction apparatus, and more specifically relates to a flue gas treatment method and to a denitration and $SO_3$ reduction apparatus for treatment of a combustion flue gas including sulfur trioxide.

BACKGROUND ART

In recent years, a flue gas treatment method and a flue gas treatment apparatus for treating combustion flue gases generated from various combustion furnaces have been strongly desired in order to prevent air pollution. Such flue gases contain nitrogen oxides ($NO_x$) and a large amount of sulfur oxides ($SO_x$). In treating $NO_x$, a method has been applied in which $NO_x$ is brought into contact with a denitration catalyst to be decomposed into nitrogen ($N_2$) and water ($H_2O$). Among $SO_x$, sulfur trioxide ($SO_3$) is corrosive, and is a factor that inhibits the continuous long-term operation for treating flue gases due to clogging by ash inside flue gas treatment facilities such as an air preheater and an electric precipitator, dew point corrosion, and the like caused due to $SO_3$.

For a method of treating such $SO_3$, a method has been known in which ammonium ($NH_3$) is charged to a combustion flue gas, then the combustion flue gas is brought into contact with a denitration catalyst constituted by ruthenium (Ru) carried on titania ($TiO_2$), and thereby $NO_x$ is reduced and generation of $SO_3$ in combustion flue gases is prevented (e.g., Patent Literature 1). However, even in the exemplary case recited in Patent Literature 1, when ammonia is consumed by a denitration reaction in a treatment of denitrating a combustion flue gas, an oxidation reaction expressed by the following expression (1) predominantly progresses, and therefore the concentration of $SO_3$ may increase. In addition, although a method of reducing $SO_3$ in a combustion flue gas by using a reductant constituted by carbon monoxide (CO) and hydrocarbon has been known, but expensive iridium (Ir) is used in the catalyst (e.g., Patent literature 2).

Patent Literature 3 discloses a system and a method for removing nitrogen oxide and sulfur trioxide from exhaust gas using a catalyst, wherein a sulfur trioxide reducing catalyst on the upstream side and a denitration catalyst on the downstream side are arranged in series with respect to the flow direction of exhaust gas. In a preferred embodiment, the denitration catalyst comprises a carrier containing titania, and at least one metal selected from Mo, W and V supported on said carrier.

Patent Literature 4 discloses a method for selectively removing nitrogen oxides from exhaust gas, the method comprising contacting the exhaust gas with ammonia in the presence of a catalyst which comprises 30 to 99% by weight of at least one catalytic oxide selected from a binary oxide comprising titanium and silicon and a ternary oxide comprising Ti, Zr and Si, and 1 to 70% by weight of a catalytic oxide comprising at least one element selected from the group consisting of V, W, Mo, U, Cu, Fe, Cr, Mn and Ce.

Patent Literature 5 discloses a method for removing arsenic compounds adsorbed on a denitration catalyst, the method comprising heat-treating the denitration catalyst in a reducing atmosphere while exposing the catalyst to hydrocarbon compounds except for methane and oxygen-containing carbon compounds. The denitration catalyst comprises a titanium dioxide carrier, and has a transition metal oxide such as $V_2O_5$, $WO_3$ or $MoO_3$ supported thereon as the active component.

Patent Literature 6 discloses a method for minimizing generation of sulfur trioxide in a gas stream containing oxygen and sulfur dioxide, the method comprising contacting the gas stream with a catalyst comprising a carrier and a catalytically active phase comprising Rh and Pt, wherein the Rh content in the catalytically active phase is $\leq 25\%$ by weight. The method may further comprise contacting the gas stream with an agent effecting reduction of sulfur trioxide to sulfur dioxide, with propylene being mentioned as an example of such agent.

[Chemical Formula 1]

$$SO_2 + 1/2O_2 \rightarrow SO_3 \qquad (1)$$

CITATION LIST

Patent Literature

[Patent Literature 1] JP 3495591

[Patent Literature 2] JP 3495527
[Patent Literature 3] EP 1 452 222 A1
[Patent Literature 4] US 4,221,768 A
[Patent Literature 5] US 2014/018231 A1
[Patent Literature 6] DE 28 11 788 A1

SUMMARY OF INVENTION

Technical Problem

Under these circumstances, an object of the present invention is to provide a flue gas treatment method and a denitration and $SO_3$ reduction apparatus that reduce treatment costs, reduce $NO_x$ contained in a combustion flue gas, and reduce the concentration of $SO_3$ more efficiently compared with prior art.

Solution to Problem

The invention is defined by the claims. In a first aspect, the present invention thus relates to a flue gas treatment method in which a 3C-5C olefinic hydrocarbon (unsaturated hydrocarbon) is added to a combustion flue gas including $SO_3$ as well as $NO_x$ as a first additive, and then the combustion flue gas is brought into contact with a catalyst which includes an oxide constituted by one or more of elements selected from the group consisting of Ti, Si, Zr, and Ce and/or a mixed oxide and/or a complex oxide constituted by two or more of elements selected from the group as a carrier but not including a noble metal, and thereby $SO_3$ is treated by reduction to $SO_2$.

In this aspect, it is made possible to denitrate NOx in the flue gas, prevent oxidation of $SO_2$, reduce the concentration of $SO_3$ during the treatment of the combustion flue gas, and reduce the costs for the material of the catalyst without having to use an expensive catalyst containing Ru and the like. In descriptions given herein and in the claims, the term "and/or" is used, as is provided by JIS Z 8301, to collectively express a combination of two terms used in parallel to each other and either one of the two terms, i.e., to collectively express the three possible meanings that can be expressed by the two terms.

It is preferable that the 3C-5C olefinic hydrocarbon (unsaturated hydrocarbon) be one or more selected from the group consisting of $C_3H_6$, $C_4H_8$, and $C_5H_{10}$. In addition, the $C_4H_8$ and $C_5H_{10}$ may be a geometric isomer or a racemic body of either one thereof.

By using the above-described additive, oxidation of $SO_2$ can be more efficiently suppressed and the concentration of $SO_3$ during the treatment of the combustion flue gas can be more efficiently reduced compared with the case of using $NH_3$ as the first additive.

It is preferable that the carrier include a mixed oxide and/or a complex oxide including one or more selected from the group consisting of $TiO_2$-$SiO_2$, $TiO_2$-$ZrO_2$, and $TiO_2$-$CeO_2$.

With the above-described carrier, the performance of reduction of $SO_3$ into $SO_2$ can be dramatically improved by using a mixed oxide and/or complex oxide with $TiO_2$ and with an amount of solid acid higher than a predetermined value.

In addition, the catalyst may be a catalyst in which a metal oxide including one or more selected from the group consisting of $V_2O_5$, $WO_3$, $MoO_3$, $Mn_2O_3$, $MnO_2$, NiO, and $Co_3O_4$ is carried on the complex oxide as the carrier.

In addition, a metallosilicate-base complex oxide, in which at least a part of A1 and/or Si in a zeolite crystal structure is substituted with one or more selected from the group consisting of Ti, V, Mn, Fe, and Co may be coated onto the catalyst.

With the above-described catalyst, $SO_3$ in the combustion flue gas can be reduced at a high reduction rate by using the first additive, and the $SO_3$ reduction reaction would not be inhibited even if $NH_3$ coexists.

It is preferable that $NH_3$ be added as a second additive simultaneously as the first additive is added and simultaneously perform the reduction of S03 and the denitration when performing a treatment for reducing $SO_3$ to $SO_2$.

In this aspect, the first additive can be added by partially reforming the ammonia supply line equipment provided to the existing denitration apparatus to contribute to reduction of $SO_3$ in the combustion flue gas.

It is preferable that the treatment for reducing $SO_3$ into $SO_2$ be performed in a temperature range of 250°C to 450°C. In addition, it is preferable that the treatment for reducing $SO_3$ into $SO_2$ be performed in a temperature range of 300°C to 400°C.

By employing the temperature ranges, the treatment for reducing $SO_3$ in the combustion flue gas to $SO_2$ by using an existing denitration apparatus and under denitration treatment conditions for a high activity of the catalyst as a denitration catalyst.

In a second aspect, the present invention relates to an $SO_3$ reduction apparatus for performing denitration of $NO_x$ and reduction of $SO_3$ in a combustion flue gas including $NO_x$ and $SO_3$, the $SO_3$ reduction apparatus including a first injection device that is configured for adding a 3C-5C olefinic hydrocarbon (unsaturated hydrocarbon) to the combustion flue gas; a second injection device that is arranged close to the first injection device and that is configured for adding $NH_3$ to the combustion flue gas; and a catalyst layer including a catalyst through which the combustion flue gas is allowed to flow. The $SO_3$ reduction apparatus is configured for simultaneously performing denitration of $NO_X$ and reduction of $SO_3$ into $SO_2$ in the combustion flue gas, and comprises one of the following configurations (a) and (b):

(a) the first injection device and the second injection device are arranged on a front stream side of the catalyst layer, or
(b) the catalyst layer includes a first catalyst layer that is arranged on a back stream side of the first injection device and that is configured for reducing the concentration of $SO_3$, and a second catalyst layer that is arranged on a back stream side of the second injection device and that is configured for performing denitration, wherein:

(b1) the first catalyst layer is arranged on a back stream side of the second catalyst layer, the first injection device is arranged on a front stream side of the first catalyst layer and on a back stream side of the second catalyst layer, and the second injection device is arranged on a front stream side of the second catalyst layer, or
(b2) the first catalyst layer is arranged on a front stream side of the second catalyst layer, the first injection device is arranged on a front stream side of the first catalyst layer and on a front stream side of the second catalyst layer, and the second injection device is arranged on a front stream side of the second catalyst layer,

and wherein the catalyst of the catalyst layer or of the first catalyst layer does not include a noble metal and includes an oxide including one or more of elements selected from the group consisting of Ti, Si, Zr, and Ce and/or a mixed oxide and/or a complex oxide including two or more of elements selected from the group as a carrier.

Advantageous Effects of Invention

According to the present invention, a flue gas treatment method and a denitration and $SO_3$ reduction apparatus are provided which are configured to denitrate $NO_x$ in the combustion flue gas and reduce the concentration of $SO_3$ in the combustion flue gas at the same time at treatment costs lower than those conventionally.

BRIEF DESCRIPTION OF DRAWINGS

[FIG. 1] FIG. 1 is a schematic diagram showing a denitration and S03 reduction apparatus according to the present invention, which is a first embodiment.
[FIG. 2] FIG. 2 is a schematic diagram showing a denitration and S03 reduction apparatus according to the present invention, which is a second embodiment.
[FIG. 3] FIG. 3 is a schematic diagram showing a denitration and S03 reduction apparatus according to the present invention, which is a third embodiment.
[FIG. 4] FIG. 4 is a graph showing variation of the concentration of $SO_3$ in a combustion flue gas in Example 1 of the present invention.
[FIG. 5] FIG. 5 is a graph showing variation of the concentration of $SO_3$ in a combustion flue gas in Example 2 of the present invention.
[FIG. 6] FIG. 6 is a graph showing a rate of reduction of $SO_3$ in a combustion flue gas and a denitration rate in Example 2 of the present invention.
[FIG. 7] FIG. 7 is a graph showing a rate of reduction of $SO_3$ and a denitration rate obtained by using a catalyst of Example 3 of the present invention.
[FIG. 8] FIG. 8 is a graph showing a relationship between a solid acid amount and an $SO_3$ reduction rate in Example 3 of the present invention.
[FIG. 9] FIG. 9 is a graph showing a rate of reduction of $SO_3$ and a denitration rate obtained by using a catalyst of Example 4 of the present invention.
[FIG. 10] FIG. 10 is a graph showing a rate of reduction of $SO_3$ obtained by using a catalyst of Example 5 of the present invention.
[FIG. 11] FIG. 11 is a graph showing a denitration rate obtained by using the catalyst of Example 5 of the present invention.

DESCRIPTION OF EMBODIMENTS

A denitration and $SO_3$ reduction apparatus and a flue gas treatment method according to the present invention will be described below with reference to embodiments shown in the attached drawings. A flue gas generated by combusting an oil-derived fuel or a coal-derived fuel in a boiler and in an oxygen atmosphere will be herein referred to as a "combustion flue gas". In addition, the stream of gas will be herein referred to as a "front stream" or "back stream" in relation to the direction of flow of a combustion flue gas.

[Denitration and $SO_3$ reduction apparatus]

(First embodiment)

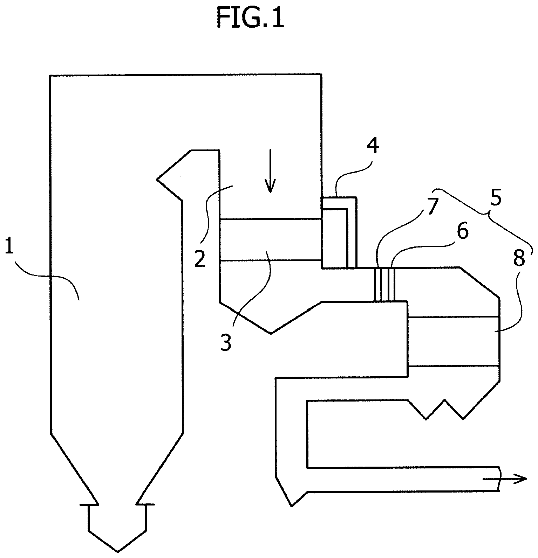

FIG. 1 shows a first embodiment, in which the denitration and $SO_3$ reduction apparatus according to the present invention is arranged on a back stream side of a boiler. Referring to FIG. 1, a denitration and $SO_3$ reduction apparatus 5 is arranged on a back stream side of a flue gas chimney 2 of a boiler which generates a flue gas in the furnace 1.

The boiler burns an externally supplied fuel in the furnace 1 and discharges a combustion flue gas generated by the burning into the flue gas chimney 2. The denitration and $SO_3$ reduction apparatus 5, which is arranged on a back stream side of the flue gas chimney 2, simultaneously performs a $NO_x$ denitration treatment and an $SO_3$ reduction treatment for the combustion flue gas that flows through the flue gas chimney 2. In the descriptions given herein and in the claims, the treatment for reducing $SO_3$ into $SO_2$ will be referred to as the "$SO_3$ reduction treatment".

An ECO 3, which is arranged in the combustion flue gas chimney 2 in which the combustion flue gas is circulated, performs heat exchange between boiler feed water and the combustion flue gas that flow through the inside of the ECO 3. More specifically, the ECO 3 increases the temperature of the boiler feed water by using the thermal inertia of the combustion flue gas and thereby improves the efficiency of combustion in the boiler. An ECO bypass 4 is arranged so that one end thereof is in communication with the front stream side of the ECO 3 and the other end thereof is in communication with the back stream side of the ECO 3, and feeds the combustion flue gas before being fed into the ECO 3 to the side of an inlet of the denitration and $SO_3$ reduction apparatus 5, bypassing the ECO 3. In addition, the ECO bypass 4 controls the temperature of the combustion flue gas to be fed into the denitration and $SO_3$ reduction apparatus 5 within a predetermined temperature range appropriate for denitration and reduction reactions.

The denitration and $SO_3$ reduction apparatus 5 is arranged in the combustion flue gas chimney 2, and at least includes a first injection device 6, a second injection device 7, and a catalyst layer 8. The denitration and $SO_3$ reduction apparatus 5 adds a first additive and a second additive to the flue gas and allows the combustion flue gas including the additives to flow through the catalyst layer 8. The denitration and $SO_3$ reduction apparatus 5 performs an $SO_3$ reduction treatment by using the catalyst layer 8, the first injection device 6, and the second injection device 7. It is preferable that the denitration and $SO_3$ reduction apparatus 5 be configured so as to add the first additive and the second additive at the same time.

The first injection device 6 is arranged on a front stream side of the denitration and $SO_3$ reduction apparatus 5 and on a back stream side of the ECO bypass 4, and adds the first additive to the combustion flue gas including $SO_3$ as well as $NO_x$. More specifically, the first injection device 6 collaborates with the catalyst layer 8 to reduce $SO_3$ in the combustion flue gas.

The first additive injected from the first injection device 6 is an $SO_3$ reductant primarily for reduction of $SO_3$ into $SO_2$, namely an olefinic hydrocarbon (unsaturated hydrocarbon) expressed by a general formula: $C_nH_{2n}$ (n is an integer of 3 to 5).

For the 3C-5C olefinic hydrocarbon (unsaturated hydrocarbon), it is preferable to use one or more selected from the group consisting of $C_3H_6$, $C_4H_8$, and $C_5H_{10}$. For the $C_4H_8$ and $C_5H_{10}$, a geometric isomer or a racemic body of either one of them can be used. Examples of $\geq$4C unsaturated hydrocarbons include 1-butene (1-$C_4H_8$); 2-butenes (2-$C_4H_8$) such as cis-2-butene and trans-2-butene; isobutene (iso-$C_4H_8$); 1-pentene (1-$C_5H_{10}$); and 2-pentenes (2-$C_5H_{10}$) such as cis-2-pentene and trans-2-pentene. With this configuration, by reactions expressed by the following expressions (2) to (8), the present invention can contribute to the reduction of $SO_3$ in an oxygen atmosphere and reduce the concentration of $SO_3$ in the combustion flue gas.

[Chemical Formula 2]

$$SO_3 + CH_3OH + 3/4O_2 \rightarrow SO_2 + 1/2CO + 1/2CO_2 + 2H_2O \qquad (2)$$

$$SO_3 + C_2H_5OH + 5/42O_2 \rightarrow SO_2 + CO + CO_2 + 2/5H_2O \qquad (3)$$

$$SO_3 + C_2H_4 + 5/2O_2 \rightarrow SO_2 + CO + CO_2 + 2H_2O \qquad (4)$$

$$SO_3 + 3/2C_3H_6 + 41/83O_2 \rightarrow SO_2 + 9/4CO + 9/4CO_2 + 6H_2O \qquad (5)$$

$$SO_3 + 3/2C_3H_8 + 63/8O_2 \rightarrow SO_2 + 9/4CO + 9/4CO_2 + 6H_2O \qquad (6)$$

$$SO_3 + 3/2C_4H_8 + 13/2O_2 \rightarrow SO_2 + 3CO + 3CO_2 + 6H_2O \qquad (7)$$

$$SO_3 + C_5H_{10} + 23/4O_2 \rightarrow SO_2 + 5/2CO + 5/2CO_2 + 5H_2O \qquad (8)$$

If $C_3H_6$ is used as the first additive, it is useful if the load of the first additive be 0.1 to 2.0 by molar ratio. If the molar ratio of the first additive is less than 0.1, the oxidation of $SO_2$ may become predominant and thus $SO_3$ may increase, and in contrast, if the molar ratio of the first additive is more than 2.0, then a large amount of unreacted excessive $C_3H_6$ may be discharged. By controlling the amount of the first additive in the above-described range, the performance of eliminating $SO_3$ in the combustion flue gas can be improved. The effect of removing $SO_3$ can be obtained outside the range specified above.

The second injection device 7 is arranged close to the first injection device 6, and adds $NH_3$ to the combustion flue gas as the second additive. The second injection device 7 is arranged on a front stream side of the denitration and $SO_3$ reduction apparatus 5 and on a back stream side of the ECO bypass 4, and injects the second additive for denitration of $NO_X$ to the combustion flue gas. The second injection device 7 collaborates with the catalyst layer 8 to denitrate $NO_x$.

The catalyst layer 8 is constituted by a catalyst which denitrates the combustion flue gas. It is preferable that the shape of the catalyst arranged in the catalyst layer 8 be a honeycomb shape so that the catalyst can efficiently function also as a denitration catalyst and reduce the pressure drop that may occur during treatment of the combustion flue gas. The honeycomb structure is not limited to a structure with a rectangular section, and can include various shapes such as circular, elliptical, triangular, pentagonal, and hexagonal shapes.

The catalyst arranged in the catalyst layer 8 is a catalyst in which the active component is carried on a carrier which is an oxide, a mixed oxide, and/or a composite oxide. More specifically, examples of the carrier include an oxide of one or more of elements selected from the group consisting of titanium (Ti), silicon (Si), zirconium (Zr), and cerium (Ce) and/or a mixed oxide and/or a composite oxide of two or more of elements selected from the above group. In other words, the carrier at least includes the following form.

- An oxide constituted by one or more of titania ($TiO_2$), silica ($SiO_2$), zirconia ($ZrO_2$), and cerium oxide ($Ce_2O_3$)
- A mixed oxide or a complex oxide constituted by two, three, or four of titanium (Ti), silicon (Si), zirconium (Zr) and cerium (Ce)
- A mixture constituted by two, three, or four of the above oxide
- A mixture of one of the above mixtures and one of the above mixed oxides or complex oxides

Among them, the mixed oxide or the complex oxides selected from the group consisting of $TiO_2$-$SiO_2$, $TiO_2$-$ZrO_2$, and $TiO_2$-$CeO_2$ is preferable, and the complex oxides selected from the above group is more preferable.

The complex oxide can be prepared by a process in which an alkoxide compound, a chloride, a sulfate, or an acetate of the above-described elements is mixed, then the resulting mixture is further mixed with water and then stirred in the form of an aqueous solution or sol for hydrolysis. The complex oxide may also be prepared by a known coprecipitation process instead of the above-described sol-gel process.

The active component is a metal oxide constituted by one or more selected from the group consisting of vanadium oxide ($V_2O_5$), tungsten oxide ($WO_3$), molybdenum oxide ($MoO_3$), manganese oxide ($Mn_2O_3$), manganese dioxide ($MnO_2$), nickel oxide (NiO), and cobalt oxide ($Co_3O_4$). With this configuration, an active metal carried by the catalyst acts as an active site, and thus the denitration of $NO_X$ such as NO and $NO_2$ can be efficiently performed in an oxygen atmosphere and the reduction of $SO_3$ in an excess oxygen atmosphere can be performed. It is preferable that the active component, among these metal oxides, include tungsten oxide ($WO_3$).

In addition, for the catalyst, a catalyst prepared by coating or impregnating a metallosilicate-base complex oxide in which at least a part of the aluminum element (Al) and/or silicon element (Si) in a zeolite crystal structure is substituted with one or more selected from the group consisting of titanium element (Ti), vanadium element (V), manganese element (Mn), iron element (Fe), and cobalt element (Co). The above-described metallosilicate can be prepared by using a hydrothermal synthesis method in which at least a part of water glass and silicon element that are the silicon source are mixed with a source of metal element to be replaced and a structure directing agent, and the mixture is placed in an autoclave and processed by using the hydrothermal synthesis method under a high temperature and high pressure.

[Flue gas treatment method]

A first embodiment of the flue gas treatment method according to the present invention will be described by describing its mode of operation of the denitration and $SO_3$ reduction apparatus according to the above-described first embodiment. The flue gas treatment method of the present embodiment at least performs an $SO_3$ reduction treatment.

In the $SO_3$ reduction treatment, the first additive for reducing $SO_3$ and $NH_3$ that is the second additive for reducing $NO_X$ are injected from the first injection device 6 and the second injection device 7 to the combustion flue gas

including $SO_3$ as well as $NO_x$ on a front stream thereof. By allowing the combustion flue gas including the charged additives to flow through the catalyst layer 8 constituted by the denitration catalyst on a back stream side thereof, the $NO_x$ denitration treatment and the $SO_3$ reduction treatment are carried out at the same time. In the treatment, it is preferable that the first additive and the second additive be added to the combustion flue gas at the same time.

It is preferable that the $SO_3$ reduction treatment be carried out in a temperature range of 250°C to 450°C, and it is more preferable to carry out the $SO_3$ reduction treatment in a temperature range of 300°C to 400°C. If the $SO_3$ reduction treatment is carried out at a temperature below 300°C, the denitration treatment may not be sufficiently completed, and in contrast, if the $SO_3$ reduction treatment is carried out at a temperature above 400°C, the reduction of $SO_3$ may not be sufficient.

According to the present embodiment, $NO_x$ in the combustion flue gas including $SO_3$ and/or $NO_x$ generated when burned in the boiler can be removed by denitration, oxidation of $SO_2$ can be prevented, and thus the concentration of $SO_3$ can be reduced during treatment of the combustion flue gas, and addition, costs for the material of the catalyst can be reduced because no expensive catalyst is used. Further, the above-described effect of the present embodiment can be achieved merely by additionally installing a first injection device configured to inject the first additive for reducing $SO_3$ on a front stream side of an existing denitration apparatus. Accordingly, the $SO_3$ reduction treatment can be carried out at low cost.

[Denitration and $SO_3$ reduction apparatus]

(Second embodiment)

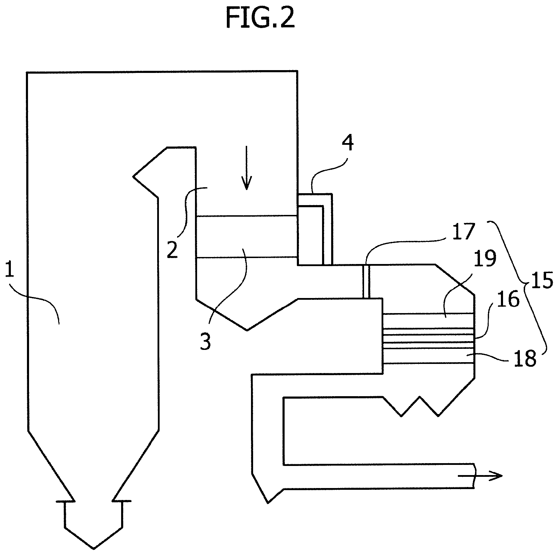

A second embodiment of the denitration and $SO_3$ reduction apparatus according to the present invention will be described in detail with reference to FIG. 2. In the present embodiment, the components that are the same as those of the above-described first embodiment of the denitration and $SO_3$ reduction apparatus will be provided with the same reference numerals and symbols, and detailed descriptions thereof will not be repeated. A denitration and $SO_3$ reduction apparatus 15 according to the present embodiment includes a catalyst layer segmented into a first catalyst layer and a second catalyst layer and a first injection device is arranged between them, and the denitration and $SO_3$ reduction apparatus 15 is different from the denitration and $SO_3$ reduction apparatus 5 according to the above-described first embodiment at this point.

Referring to FIG. 2, the denitration and $SO_3$ reduction apparatus 15 is arranged in the combustion flue gas chimney 2, and at least includes s first injection device 16 configured to add the first additive to the combustion flue gas; a second injection device 17 configured to add the second additive to the combustion flue gas; and a catalyst layer a catalyst configured to denitrate the combustion flue gas. The catalyst layer is constituted by a first catalyst layer 18 configured to reduce the concentration of $SO_3$ and a second catalyst layer 19, which is arranged on a front stream side of the first catalyst layer 18 and configured to perform denitration. The denitration and $SO_3$ reduction apparatus 15 adds the second additive from the second injection device 17 to the combustion flue gas that enters therein from the flue gas chimney 2, and then allows the combustion flue gas containing the second additive to flow through the second catalyst 19. In addition, the denitration and $SO_3$ reduction apparatus 15 adds the first additive from the first injection device 16 to the combustion flue gas that has gone through the second catalyst 19 and then allows the combustion flue gas containing the first additive to flow through the first catalyst layer 18.

The first injection device 16 is arranged in the combustion flue gas chimney 2 on a front stream side of the first catalyst layer 18 and on a back stream side of the second catalyst layer 19. The first catalyst layer 18 is arranged on a back stream side of the second catalyst layer 19. In addition, the first injection device 16 injects the first additive for reducing the concentration of $SO_3$ to the combustion flue gas.

The second injection device 17 is arranged in the combustion flue gas chimney 2 on a front stream side of the second catalyst layer 19. In addition, the second injection device 17 injects the second additive for denitration of $NO_x$ to the combustion flue gas. For the second injection device 17 and the second catalyst layer 19, a denitration apparatus installed in an existing plant can be employed, for example.

For the first additive injected from the injection device 16 and the catalyst installed in the catalyst layer 18, an additive and a catalyst similar to those of the first embodiment can be applied. For the second additive injected from the injection device 17 and the catalyst installed in the second catalyst layer 19, not only an additive and a catalyst similar to those of the first embodiment but also a publicly known catalyst (e.g., $V_2O_5$-$TiO_2$) can be applied.

[Flue gas treatment method]

A second embodiment of the flue gas treatment method according to the present invention will be described by describing a mode of operation of the above-described second embodiment of the denitration and $SO_3$ reduction apparatus. The flue gas treatment method of the present embodiment at least performs an $SO_3$ reduction treatment.

In the $SO_3$ reduction treatment, as a pretreatment to a combustion flue gas at least including $NO_x$ and $SO_3$, $NH_3$ that is the second additive is added from the second injection device 17 to the combustion flue gas, and the combustion flue gas is brought into contact with the denitration catalyst in the second catalyst 19 arranged on a back stream side of the second injection device 17. Then, as a posttreatment, an additive for $SO_3$ is added from the first injection device 16 to the combustion flue gas, and the combustion flue gas is brought into contact with the catalyst for $SO_3$ in the first catalyst layer 18 arranged on a back stream side of the first injection device 16.

For the treatment temperature for the $SO_3$ reduction treatment, temperature ranges similar to those of the first embodiment can be employed.

According to the denitration and $SO_3$ reduction apparatus and the flue gas treatment method of the second embodiment, $SO_3$ can be more efficiently treated on a back stream side of the existing denitration apparatus, and in addition, the catalyst can be easily exchanged according to degradation of the function of the catalyst used for the denitration and the reduction of $SO_3$, respectively.

[Denitration and $SO_3$ reduction apparatus]

(Third embodiment)

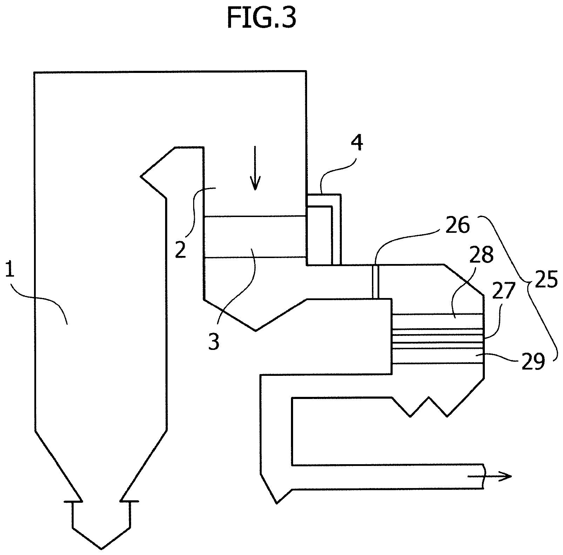

A third embodiment of the denitration and $SO_3$ reduction apparatus according to the present invention will be described in detail with reference to FIG. 3. In the present embodiment, the components that are the same as those of the first and the second embodiments are provided with the same reference numerals and symbols, and detailed descriptions thereof will not be repeated. A denitration and $SO_3$ reduction apparatus 25 according to the present embodiment is different from the denitration and $SO_3$ reduction apparatus 15 according to the second embodiment in such a point that a first injection device and a first catalyst layer are arranged on a front stream side of a second injection device and a second catalyst layer.

Referring to FIG. 3, the denitration and $SO_3$ reduction apparatus 25 is arranged in the combustion flue gas chimney 2, and at least includes a first injection device 26, a second injection device 27, a first catalyst layer 28, and a second catalyst layer 29. The denitration and $SO_3$ reduction apparatus 25 adds a second additive from the first injection device 26 to a combustion flue gas that enters from the flue gas chimney 2, and then allows the combustion flue gas containing the second additive to flow through the first catalyst layer 28. In addition, the denitration and $SO_3$ reduction apparatus 25 adds the second additive from the second injection device 27 to the combustion flue gas that has flown through the first catalyst layer 28, and then allows the combustion flue gas containing the second additive to flow through the second catalyst layer 29.

The first injection device 26 is arranged in the combustion flue gas chimney 2 on a front stream side of the first catalyst layer 28 and on a front stream side of the second catalyst layer 29. The first catalyst layer 28 is arranged on a front stream side of the second catalyst layer 29. The first injection device 26 injects the first additive for reducing the concentration of $SO_3$ to the combustion flue gas. The second injection device 27 is arranged in the combustion flue gas chimney 2 on a front stream side of the second catalyst layer 29. In addition, the second injection device 27 injects the second additive for denitration of $NO_x$ to the combustion flue gas. Similarly to the second embodiment, for the second injection device 27 and the second catalyst layer 29 also, a denitration apparatus installed in an existing plant can be applied.

For the first additive injected from the injection device 26 and the catalyst installed in the catalyst layer 28, an additive and a catalyst similar to those of the first and the second embodiments can be applied. In addition, for the second additive injected from the injection device 27 and the catalyst installed in the second catalyst layer 29 also, not only an additive and a catalyst similar to those of the first embodiment but also a publicly known denitration catalyst (e.g., $V_2O_5$-$TiO_2$) can be applied.

[Flue gas treatment method]

A third embodiment of the flue gas treatment method according to the present invention will be described by describing a mode of operation of the denitration and $SO_3$ reduction apparatus according to the above third embodiment. The flue gas treatment method of the present embodiment at least performs a $SO_3$ reduction treatment.

In the $SO_3$ reduction treatment, as a pretreatment to a combustion flue gas at least including $NO_x$ and $SO_3$, an additive for $SO_3$ is added from the first injection device 26, and the combustion flue gas is brought into contact with the catalyst for $SO_3$ in the first catalyst layer 28 arranged on a back stream side of the first injection device 26. Then, as a posttreatment, $NH_3$ is added from the second injection device 27 to the combustion flue gas as the second additive, and the combustion flue gas is brought into contact with the denitration catalyst in the second catalyst 29 arranged on a back stream side of the second injection device 27.

For the treatment temperature for the $SO_3$ reduction treatment, temperature ranges similar to those of the first and the second embodiments can be employed.

According to the denitration and $SO_3$ reduction apparatus and the flue gas treatment method of the third embodiment, $SO_3$ can be more efficiently treated on a back stream side of the existing denitration apparatus, and in addition, the catalyst can be easily exchanged according to degradation of the function of the catalyst used for the denitration and the reduction of $SO_3$, respectively.

EXAMPLES

The effects of the present invention will be clarified by more specifically describing the present invention with reference to examples. The flue gas treatment method and the denitration and $SO_3$ reduction apparatus according to the present invention are not limited by the following examples by any means.

[Example 1]

By using a different catalyst, the effect of the first additive ($SO_3$ reductant) for reducing $SO_3$ into $SO_2$ were examined.

(Preparation of catalyst A)

A catalyst A including ruthenium (Ru), which functions as a catalyst for reducing $SO_3$ into $SO_2$, was prepared. An aqueous solution of ruthenium chloride ($RuCl_3$) was impregnated with an anatase type titania powder including 10 wt.% tungsten oxide ($WO_3$) per 100 wt.% titania ($TiO_2$), thereby 1 wt.% Ru was carried on the powder per 100 wt.% of anatase type titania powder, and the resultant was evaporated and dried. Then the residue was fired at 500°C for 5 hours, and the obtained powder was used as the catalyst A.

(Preparation of catalyst B)

A catalyst B was prepared as a typical catalyst having a denitration function by ammonia. $Ti(O\text{-}iC_3H_7)_4$, a Ti alkoxide, and $Si(OCH_3)_3$, a Si alkoxide, were mixed at a ratio of 95:5 (wt.%) (as $TiO_2$, $SiO_2$, respectively), the mixture was added to 80°C water for hydrolysis, then the reaction mixture was stirred and matured, the produced sol was filtered, and the obtained gelled product was washed, dried, and heated and fired at 500°C for 5 hours to obtain a powder of $TiO_2\text{-}SiO_2$ complex oxide ($TiO_2\text{-}SiO_2$ powder). Ammonium metavanadate ($NH_3VO_3$) and ammonium paratungstate ($(NH_4)_{10}H_{10}W_{12}O_{46}\cdot 6H_2O$) were impregnated into the complex oxide by using a 10 wt.% aqueous solution of methylamine, 0.6 wt.% $V_2O_5$ and 8 wt.% $WO_3$ were carried per 100 wt.% complex oxide, the resultant was evaporated and dried, and then heated and fired at 500°C for 5 hours. The obtained powder was used as the catalyst B.

(Preparation of catalyst C)

A catalyst C, a typical catalyst having a function of denitration by ammonia, was prepared. $Ti(O\text{-}iC_3H_7)_4$, a Ti alkoxide, and $Zr(Oi\text{-}C_4h_9)_4$, a Zr alkoxide, were mixed at a ratio of 95:5 (wt.%) (as $TiO_2$, $ZrO_2$, respectively), the mixture was added to 80°C water for hydrolysis, then the reaction mixture was stirred and matured, the produced sol was filtered, and the obtained gelled product was washed, dried, and heated and fired at 500°C for 5 hours to obtain a powder of $TiO_2\text{-}ZrO_2$ complex oxide ($TiO_2\text{-}ZrO_2$ powder). Ammonium paratungstate ($(NH_4)_{10}H_{10}W_{12}O_{46}\cdot 6H_2O$) was impregnated into the complex oxide by using a 10 wt.% aqueous solution of methylamine, 8 wt.% $WO_3$ was carried per 100 wt.% complex oxide, the resultant was evaporated and dried, and then heated and fired at 500°C for 5 hours. The obtained powder was used as the catalyst C.

(Preparation of catalyst D)

A catalyst D containing titania ($TiO_2$) only was prepared. A powder of anatase type titania of the same amount as the catalyst A was fired at 500°C for 5 hours to prepare a powder of catalyst D.

(Preparation of Test Examples 1 to 5)

80 wt.% of water was added respectively to 20 wt.% of catalysts A to D, and the mixture was pulverized by wet ball mill to obtain wash coat slurry. Then a monolith base material (pitch: 7.4 mm, wall thickness: 0.6 mm) produced by Cordierite was coated with the slurry by dipping, and the obtained product was dried at 120°C and then fired at 500°C. The amount of the coating was 100 g per surface area of 1 $m^2$ of the base material. A case of using the catalyst A and

ammonia ($NH_3$) was used as the $SO_3$ reductant was used as Test Example 1. On the other hand, a case of using the catalyst A and propylene ($C_3H_6$) was used as the $SO_3$ reductant was used as Test Example 2. A case of using the catalyst B and $C_3H_6$ was used as the $SO_3$ reductant was used as Test Example 3. A case of using the catalyst C and $C_3H_6$ as the $SO_3$ reductant was used as Test Example 4. In addition, a case of using the catalyst D and $C_3H_6$ as the $SO_3$ reductant was used as Test Example 5.

($SO_3$ removal test I)

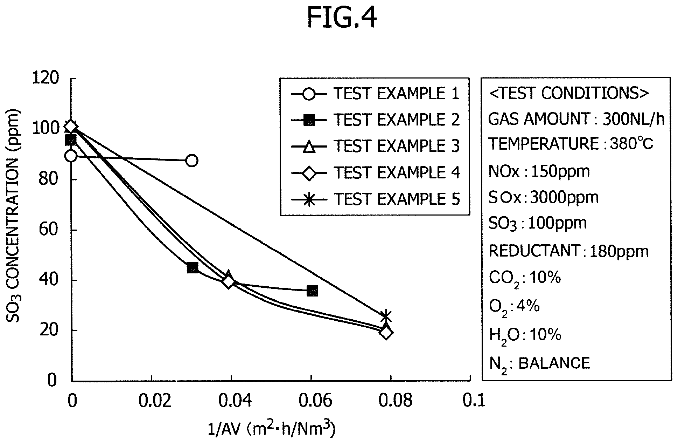

By bench-scale testing in which an actual machine is assumed, the $SO_3$ reductant was added to the combustion flue gas, and the combustion flue gas containing the $SO_3$ reductant was allowed to flow through the catalyst of the respective Test Examples installed in the denitration and $SO_3$ reduction apparatus, and thereby variation of the concentration of $SO_3$ (ppm) in the combustion flue gas in terms of 0.03 to 0.8 (1/AV ($m^2 \cdot h/Nm^3$) after the combustion flue gas had flowed through the catalyst layer was examined. The test results and the test conditions are shown in FIG. 4. The concentration of $SO_3$ was analyzed by a deposition titration method after the sampling was done. In the drawing, "AV" denotes the area velocity (total contact area by gas amount/catalyst), and "1/AV" means the total contact area of the catalyst in relation to the gas amount. The unit of 1/AV is denoted as $m^2 \cdot h/Nm^3$.

FIG. 4 shows variation of the concentration of $SO_3$ (ppm) in terms of 0.03 to 0.08 $m^2 \cdot h/Nm^3$ in Test Examples 1 to 5. Referring to FIG. 4, in Test Example 1, the concentration of $SO_3$ at the inlet of the catalyst layer did not substantially vary. In Test Example 2, the concentration of $SO_3$ at the inlet of the catalyst layer decreased from about 100 ppm to about 40 ppm at 0.06 $m^2 \cdot h/Nm^3$. On the other hand, in Test Example 3, the concentration of $SO_3$ at the inlet of the catalyst layer decreased from about 100 ppm to about 20 ppm at 0.08 $m^2 \cdot h/Nm^3$. In Test Example 4, the concentration of $SO_3$ at the inlet of the catalyst layer decreased from about 100 ppm to about 20 ppm at 0.08 $m^2 \cdot h/Nm^3$. In addition, also in Test Example 5, the concentration of $SO_3$ at the inlet of the catalyst layer decreased from about 100 ppm to about 25 ppm at 0.08 $m^2 \cdot h/Nm^3$.

It was observed that in Test Example 1 in which the catalyst A containing Ru was used and $NH_3$ was used as the $SO_3$ reductant, the concentration of $SO_3$ at the inlet of the catalyst layer did not substantially vary. It was observed that in Test Example 2 in which the catalyst A containing Ru was used and $C_3H_6$ was used as the $SO_3$ reductant, the concentration of $SO_3$ in the combustion flue gas decreased. In addition, it was observed that in Test Example 3 using the catalyst B not including expensive Ru, by using $C_3H_6$ as the $SO_3$ reductant, the concentration of $SO_3$ in the combustion flue gas remarkably decreased. In addition, it was observed that in Test Example 4 using the catalyst C, by using $C_3H_6$ as the $SO_3$ reductant, the concentration of $SO_3$ in the combustion flue gas remarkably decreased. Furthermore, it was observed that also in Test Example 5 using the catalyst D, by using $C_3H_6$ as the $SO_3$ reductant, the concentration of $SO_3$ in the combustion flue gas remarkably decreased. From these results, it was found that by using $C_3H_6$ as the $SO_3$ reductant, concentration of $SO_3$ in the combustion flue gas could be reduced.

It was found that instead of using the catalyst A including Ru, by using a hydrocarbon including hydrogen element (H) and carbon element (C) such as $C_3H_6$, concentration of $SO_3$ in the combustion flue gas at the inlet of the catalyst layer could be reduced more even if a normal denitration catalyst was used, compared with the case of using $NH_3$ as the $SO_3$ reductant. Next, based on the elementary reaction model on the surface of the catalyst described in the following items 1 to 4, it was estimated that to obtain these results, sulfonation occurring due to the reaction on the catalyst between the matter obtained by decomposition of hydrocarbon and $SO_3$ was important.

1. Hydrocarbon adsorption reaction

$$\text{Hydrocarbon } (C_xH_y) + \text{surface} \rightarrow C_xH_y - \text{surface}$$

2. Hydrocarbon decomposition reaction (hydrogen abstraction reaction)

$$C_xH_y - \text{surface} \rightarrow C_xH_{y-1} \text{ (surface-coordination)} + H- \text{surface}$$

3. Reaction with $SO_{3(g)}$ (conversion into sulfonic acid)

$$C_xH_{y-1} \text{ (surface-coordination)} + SO_{3(g)} \rightarrow SO_2 + C_xH_{y-1} - SO_{3\_}H_\_ \text{ surface)}$$

4. Decomposition of $SO_3$

$$C_xH_{y-1}-SO_{3\_}H_\_ \text{ surface} \rightarrow SO_2 + CO_2 + CO$$

[Example 2]

By using a hydrocarbon with a different composition as the first additive ($SO_3$ reductant), the effect of reducing $SO_3$ into $SO_2$ depending on the composition of the hydrocarbon compound was examined.

(Preparation of Test Examples 6 to 10)

Similarly to Example 1, the catalyst B was coated on a monolith base material produced by Cordierite. The amount of the coating was 100 g per surface area of 1 $m^2$ of the base material. The case in which $C_3H_6$ was used as the $SO_3$ reductant was used as Test Example 6, the case in which propane ($C_3H_8$) was used as the $SO_3$ reductant was used as Test Example 7, the case in which methanol ($CH_3OH$) was used as the $SO_3$ reductant was used as Test Example 8, and the case in which ethanol ($C_2H_5OH$) was used as the $SO_3$ reductant was used as Test Example 9. In addition, for comparison with the other Test Examples, the case in which ammonia ($NH_3$) was used as the $SO_3$ reductant was used as Test Example 10.

($SO_3$ removal test II)

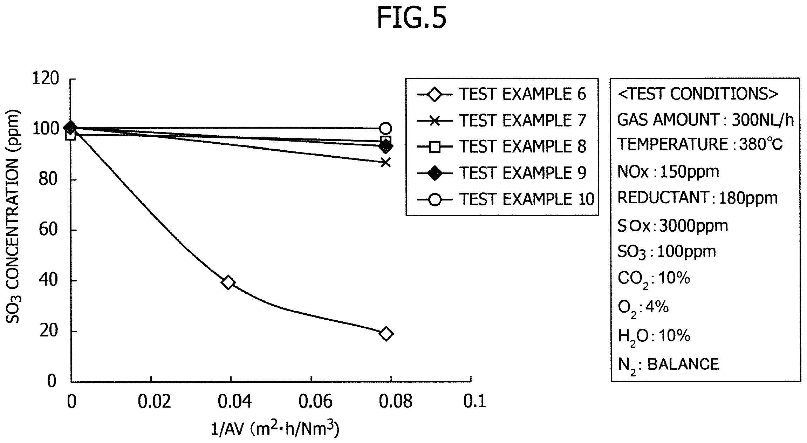

Similarly to Example 1, the $SO_3$ reductant was added to the combustion flue gas, and the combustion flue gas containing the $SO_3$ reductant was allowed to flow through the catalyst layer using the $SO_3$ catalyst installed in the denitration and $SO_3$ reduction apparatus, and thereby variation of the concentration of $SO_3$ in the combustion flue gas at 0.04 to 0.08 $m^2 \cdot h/Nm^3$ after the combustion flue gas had flowed through the catalyst layer. The variation of the concentration of $SO_3$ before and after the combustion flue gas had flowed through the catalyst layer was examined. The test conditions were the same as those of Example 1. The test results and the test conditions are shown in FIG. 5.

FIG. 5 shows variation of the concentration of $SO_3$ (ppm) in the combustion flue gas at 0.04 to 0.08 $m^2 \cdot h/Nm^3$ in Test Examples 6 to 10. Referring to FIG. 5, in Test Examples 6 to 9, the concentration of $SO_3$ in the combustion flue gas at the inlet of the catalyst layer decreased. In contrast, in Test Example 10, the concentration of $SO_3$ in the combustion flue gas at the inlet of the catalyst layer did not decrease. In Test Examples 5 and 6 in which $C_3H_6$ and $C_3H_8$ were used as the $SO_3$ reductant, the concentration of $SO_3$ in the combustion flue gas decreased more compared with the Test Examples 8 and 9 in which $CH_3OH$ and $C_2H_5OH$ were used as the $SO_3$ reductant. In addition, in Test Example 6 in which $C_3H_6$ was used as the $SO_3$ reductant, the effect of reducing the concentration of $SO_3$ was the most remarkable.

Then, further, by using a hydrocarbon having a different composition as the first additive ($SO_3$ reductant), the effect of reducing $SO_3$ into $SO_2$ and the denitration effect depending on the composition of the hydrocarbon compound were examined.

(Preparation of catalyst E)

A catalyst E was prepared in a similar manner as the case of preparing the catalyst B except that the ratio of $TiO_2$ and $SiO_2$ was changed to 88:12 (wt.%), that the amount of $V_2O_5$ was 0.3 wt.%, and that the amount of $WO_3$ was 9 wt.%.

(Preparation of Test Examples 11 to 18)

Similarly to Example 1, the catalyst E was coated onto the monolith base material produced by Cordierite. The case in which methanol ($CH_3OH$) was used as the $SO_3$ reductant was used as Test Example 11, the case in which ethanol ($C_2H_5OH$) was used as the $SO_3$ reductant was used as Test Example 12, and the case in which propane ($C_3H_8$) was used as the $SO_3$ reductant was used as Test Example 13. In addition, the case in which ethylene ($C_2H_4$) was used as the $SO_3$ reductant was used as Test Example 14, the case in which propylene ($C_3H_6$) was used as the $SO_3$ reductant was used as Test Example 15, the case in which 1-butene (1-$C_4H_8$) was used as the $SO_3$ reductant was used as Test Example 16, the case in which 2-butene (2-$C_4H_8$) was used as the $SO_3$ reductant was used as Test Example 17, the case in which isobutene (iso-$C_4H_8$) was used as the $SO_3$ reductant was used as Test Example 18.

($SO_3$ removal test III)

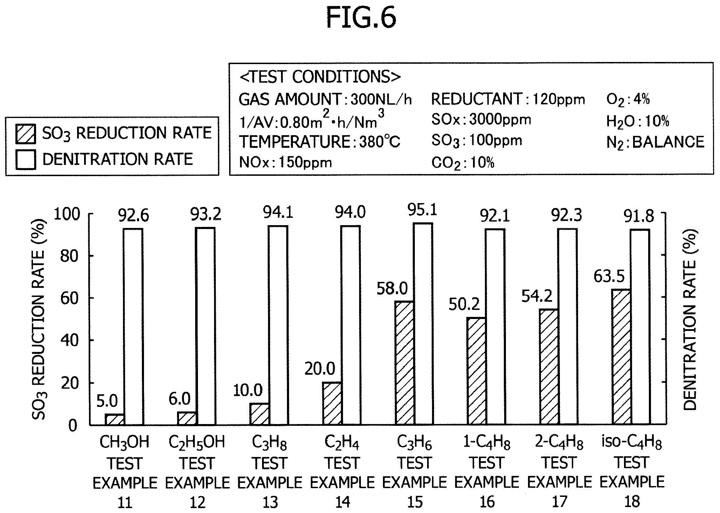

By using Test Examples 11 to 18, similarly to Example 1, the $SO_3$ reductant was added to the combustion flue gas, and the combustion flue gas containing the $SO_3$ reductant was allowed to flow through the catalyst layer using the $SO_3$ catalyst installed in the denitration and $SO_3$ reduction apparatus, and thereby the variation of the concentration of $SO_3$ and the denitration rate before and after the combustion flue gas had flowed through the catalyst layer was examined. The $SO_3$ reduction rate and the denitration rate were determined in the following manner. The test results and the test conditions are shown in FIG. 6.

$$\text{SO}_3 \text{ reduction rate } (\%) = (1 - \text{concentration of SO}_3 \text{ at catalyst layer}$$

$$\text{outlet/concentration of SO}_3 \text{ at catalyst layer inlet}) \times 100$$

$$\text{Denitration rate } (\%) = (1 - \text{concentration of NO}_x \text{ at catalyst layer outlet/concentration}$$

$$\text{of NO}_x \text{ at catalyst layer inlet}) \times 100$$

FIG. 6 shows the $SO_3$ reduction rate (%) and the denitration rate (%) at 0.080 $m^2 \cdot h/Nm^3$ in Test Examples 11 to 18. Referring to FIG. 6, in Test Example 11 using an alcohol, the $SO_3$ reduction rate was 5.0%, and in Test Example 12 using an alcohol, the $SO_3$ reduction rate was 6.0%. In contrast, the $SO_3$ reduction rate of Test Example 13 using a saturated hydrocarbon was 10.0%, while in Test Example 14 using an unsaturated hydrocarbon was 20.0%, which were high values. Further, in Test Examples 15 to 18 using $\geq$3C unsaturated hydrocarbons, the $SO_3$ reduction rate of Test Example 15 was 58.0%, the $SO_3$ reduction rate of Test Example 16 was 50.2%, the $SO_3$ reduction rate of Test Example 17 was 54.2%, and the $SO_3$ reduction rate of Test Example 18 was 63.5%, which were very high values.

In Test Examples 11 and 12 using alcohols, the denitration rate of Test Example 11 was 92.6%, and the denitration rate of Test Example 12 was 93.2%. In Test Examples 13 and 14 using a saturated hydrocarbon and an unsaturated hydrocarbon, the denitration rate of Test Example 13 was 94.1 %, and the denitration rate of Test Example 14 was 94.0%, which were high values. In Test Examples 15 to 18 using $\geq$3C unsaturated hydrocarbons, the denitration rate of Test Example 15 was 95.1 %, the denitration rate of Test Example 16 was 92.1 %, the denitration rate of Test Example 17 was 92.3%, and the denitration rate of Test Example 18 was 91.8%, which were sufficiently high values.

From the results of Examples 1 and 2, it was found that by using a hydrocarbon including the elements H and C as the $SO_3$ reductant, the concentration of $SO_3$ in the combustion flue gas at the inlet of the catalyst layer decreased. It was also found that by using $C_3H_8$, $C_2H_4$, $C_3H_6$, or $C_4H_8$, i.e., a saturated hydrocarbon or an unsaturated hydrocarbon, as the $SO_3$ reductant, the concentration of $SO_3$ in the combustion flue gas decreased more compared with the case of using alcohols such as $CH_3OH$ and $C_2H_5OH$. Further, it was found that among them, by using $C_2H_4$, $C_3H_6$, or $C_4H_8$, i.e., an unsaturated hydrocarbon, as the $SO_3$ reductant, the concentration of $SO_3$ in the combustion flue gas could be efficiently decreased. It was found that by using $\geq$3C unsaturated hydrocarbons as the $SO_3$ reductant, in particular, the concentration of $SO_3$ in the combustion flue gas remarkably decreased. It was estimated that this was because the decomposition activity of $\geq$3C unsaturated hydrocarbons is high and the intermediate body thereof has high reactivity with $SO_3$.

[Example 3]

A catalyst having another composition was prepared and the effect of reducing $SO_3$ into $SO_2$ and the denitration rate depending on the catalyst composition was examined.

(Preparation of catalyst F)

$Ti(O\text{-}iC_3H_7)_4$, a Ti alkoxide, and $Ce(OCH_3)_4$, a Ce alkoxide, were mixed at a ratio of 88 : 12 (wt.%) (as $TiO_2$, $CeO_2$, respectively), the mixture was added to 80°C water for hydrolysis, then the reaction mixture was stirred and matured, the produced sol was filtered, and the obtained gelled product was washed, dried, and heated and fired at 500°C for 5 hours to obtain a powder of $TiO_2\text{-}Ce_2O_3$ complex oxide ($TiO_2\text{-}Ce_2O_3$ powder). The obtained powder was used as the catalyst F.

(Preparation of catalyst G)

A catalyst including zirconia ($ZrO_2$) only was prepared. A powder of zirconium oxychloride ($ZrOCl_2$) was fired at 500°C for 5 hours, and the obtained powder was used as the catalyst G.

(Preparation of catalyst H)

A catalyst including cerium oxide ($Ce_2O_3$) only was prepared. A powder of cerium nitrate ($Ce(NO_3)_2$) was fired at 500°C for 5 hours, and the obtained powder was used as the catalyst H.

(Preparation of Test Examples 19 to 24)

80 wt.% water was added respectively to the $TiO_2$-$SiO_2$ powder of the catalysts D and B, the $TiO_2$-$ZrO_2$ powder of the catalyst C, and the catalysts F, G, and H, of which the amount was 20 wt.%, respectively, and the mixture was pulverized by wet ball mill to obtain wash coat slurry, and then the slurry was coated onto a ceramics base material including kaolinite as its main component, and the obtained pieces were used as Test Examples 19 to 24. Table 1 shows the composition of the respective Test Examples. In Table 1, for the coating amount average value, an average value was used which was obtained by measurement of 2 samples by using values calculated by dividing a carriage amount, which had been obtained based on the difference in the weight before and after the coating by the surface area of the base material.

[Table 1]

Table 1 - Test Example Composition 1

|  | Catalyst composition | Coating amount average value | Charged material shape |
|---|---|---|---|
| Test Example 19 | $TiO_2$ | 106 | $3 \times 3 \times 60 \times 2$ |
| Test Example 20 | $TiO_2$-$SiO_2$ | 108 | |
| Test Example 21 | $TiO_2$-$ZeO_2$ | 127 | |
| Test Example 22 | $TiO_2$-$Ce_2O_3$ | 127 | |
| Test Example 23 | $ZrO_2$ | 102 | |
| Test Example 24 | $Ce_2O_3$ | 103 | |

($SO_3$ removal test VI)

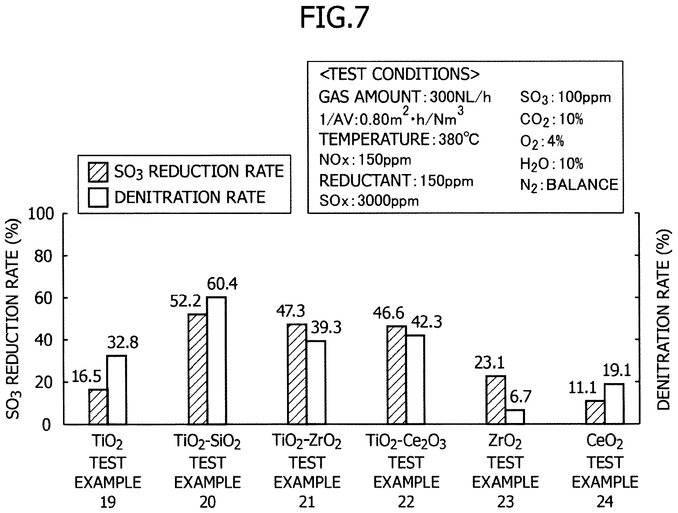

The capability of reducing $SO_3$ when propylene ($C_3H_6$) was used as the $SO_3$ reductant was examined for the respective Test Examples. Similarly to Example 2, the $SO_3$ reductant was added to the combustion flue gas, and the combustion flue gas including the $SO_3$ reductant was allowed to flow through the catalyst layer using the $SO_3$ catalyst installed in the denitration and $SO_3$ reduction apparatus, and thereby variation of the concentration of $SO_3$ before and after the combustion flue gas had flowed through the catalyst layer was examined. The test results and the test conditions are shown in FIG. 7.

FIG. 7 shows the $SO_3$ reduction rate (%) and the denitration rate (%) at 0.080 $m^2 \cdot h/Nm^3$ in Test Examples 19 to 24. Referring to FIG. 7, in Test Examples 19, 23, and 24 in which an oxide including a single component, the $SO_3$ reduction rate of Test Example 19 was 16.5%, the $SO_3$ reduction rate of Test Example 23 was 23.1%, and the $SO_3$ reduction rate of Test Example 24 was 11.1%. On the other hand, in Test Examples 20 to 22 in which a complex oxide containing $TiO_2$ was used, the $SO_3$ reduction rate of Test Example 20 was 52.2%, the $SO_3$ reduction rate of Test Example 21 was 47.3%, and the $SO_3$ reduction rate of Test Example 22 was 46.6%.

In addition, in Test Examples 19, 23, and 24 in which an oxide including a single component was used, the denitration rate of Test Example 19 was 32.8%, the denitration rate of Test Example 23 was 6.7%, and the denitration rate of Test Example 24 was 19.1 %. On the other hand, in Test Examples 20 to 22 in which a complex oxide containing $TiO_2$ was used, the denitration rate of Test Example 20 was 60.4%, the denitration rate of Test Example 21 was 39.3%, and the denitration rate of Test Example 22 was 42.3%.

From these results, in all of Test Examples 19 to 24, the concentration of $SO_3$ in the combustion flue gas at the inlet of the catalyst layer decreased. In Test Examples 20 to 22 in which the $TiO_2$-$SiO_2$ powder, $TiO_2$-$ZrO_2$ powder, or the $TiO_2$ - $Ce_2O_3$ powder was used, the $SO_3$ reduction rate was higher than that in Test Examples 19, 23, and 24 in which the $TiO_2$ powder, $ZrO_2$ powder, or the $Ce_2O_3$ powder was used. In addition, in Test Examples 19, 23, and 24 in which an oxide including a single component was used, the reduction rate of Test Example 19 in which the $TiO_2$ powder was used was high, and the reduction rate of Test Example 23 in which the $ZrO_2$ powder was used was the highest. In addition, among Test Examples 20 to 22 in which the complex oxide was used, the $SO_3$ reduction rate of Test Example 19 using the $TiO_2$-$SiO_2$ powder was the most remarkable. From these results, it was found that by using a complex oxide containing $TiO_2$, in particular, the $SO_3$ reduction rate could be high. It was estimated that the above results were obtained due to increase of the solid acid amount, which occurred due to the use of the complex oxide.

(Determination of the solid acid amount)

Then the relationship between the solid acid amount and the $SO_3$ reduction rate was examined. The solid acid amount in Test Examples 19 to 24 was measured by a pyridine thermal adsorption desorption method. More specifically, the same amount of 25 mg of a powder of quartz was added to the respective Test Example and the mixture was fixed in a quartz glass tube with Kaowool. The quartz glass tube was installed in an electric furnace installed in FID gas chromatography, then the reaction mixture was treated under the condition of the temperature of 450°C for 30 minutes in a helium (He) gas stream. Then the electric furnace was maintained at 150°C, pyridine was injected by 0.5 $\mu$l for 4 to 6 times until saturation in terms of pulse was obtained, and the pyridine was adsorbed to the respective Test Examples. Then the temperature of the electric furnace was raised at the rate of 30°C/min, the desorbed pyridine was measured by FID gas chromatography, and the solid acid amount of the respective Test Examples was determined based on the obtained peak value in TPD spectrum.

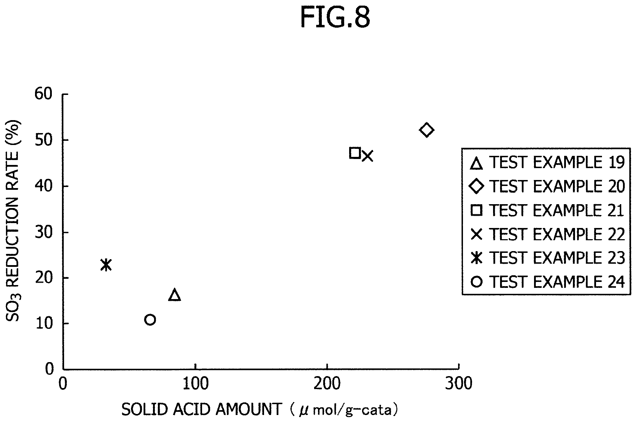

FIG. 8 shows the relationship between the solid acid amount ($\mu$mol/g·cata) and the $SO_3$ reduction rate (%) measured in the respective Test Examples 19 to 24. Referring to FIG. 8, the larger the solid acid amount of the catalyst was, the higher the $SO_3$ reduction rate was. In particular, in Test Examples in which the solid acid amount was 200 $\mu$mol/g·cata to 300 $\mu$mol/g·cata, the $SO_3$ reduction rate was high. From these results, it was found that it became more effective for reduction of $SO_3$ as the solid acid amount increased.

[Example 4]

A catalyst having yet another composition was prepared and the effect of an active metal for reducing $SO_3$ into $SO_2$ and the denitration rate were examined.

(Preparation of catalyst H)

Ti(O-iC$_3$H$_7$)$_4$, a Ti alkoxide, and Si(OCH$_3$)$_3$, a Si alkoxide, were mixed at a ratio of 95:5 (wt.%) (as $TiO_2$, $SiO_2$, respectively), the mixture was added to 80°C water for hydrolysis, then the reaction mixture was stirred and matured, the produced sol was filtered, and the obtained gelled product was washed, dried, and heated and fired at 500°C for 5 hours to obtain a powder of $TiO_2$-$SiO_2$ complex oxide ($TiO_2$-$SiO_2$ powder). The obtained powder was used as the catalyst H.

(Preparation of Test Examples 25 to 32)

80 wt.% water was added to 20 wt.% catalyst H, and the mixture was pulverized by wet ball mill to obtain wash coat slurry, and then the slurry was coated onto a ceramic base material including kaolinite as its main component, and the obtained piece was used as Test Example 25. In addition, a predetermined amount of the respective solution of sulfate or nitrate used as the raw material of $V_2O_5$, $MoO_3$, Ag, $WO_3$, $Mn_2O_3$, NiO, and $Co_3O_4$, respectively, was added to the catalyst H, the solution was impregnated and the component was carried, then the obtained product was coated onto the ceramic base material similarly to Test Example 25, and the resultant product was used as Test Examples 26 to 32. The coating amount for each Test Example was measured similarly to Example 3, i.e., about 100 g/m$^2$. Table 2 shows the composition of the respective Test Examples.

[Table 2]

Table 2 - Test Example Composition 2

| | Catalyst composition | | Load of active component |
|---|---|---|---|
| | Active Component | Carrier | |
| Test Example 25 | - | | - |
| Test Example 26 | $V_2O_5$ | | 3.0/3.5 |
| Test Example 27 | $MoO_3$ | | 3.0/5.5 |
| Test Example 28 | Ag | $TiO_2$-$SiO_2$ | 0.7/1.0 |
| Test Example 29 | $WO_3$ | | 3.0/8.9 |
| Test Example 30 | $Mn_2O_3$ | | 3.0/3.0 |
| Test Example 31 | NiO | | 3.0/2.9 |
| Test Example 32 | $Co_3O_4$ | | 3.0/3.1 |

($SO_3$ removal test V)

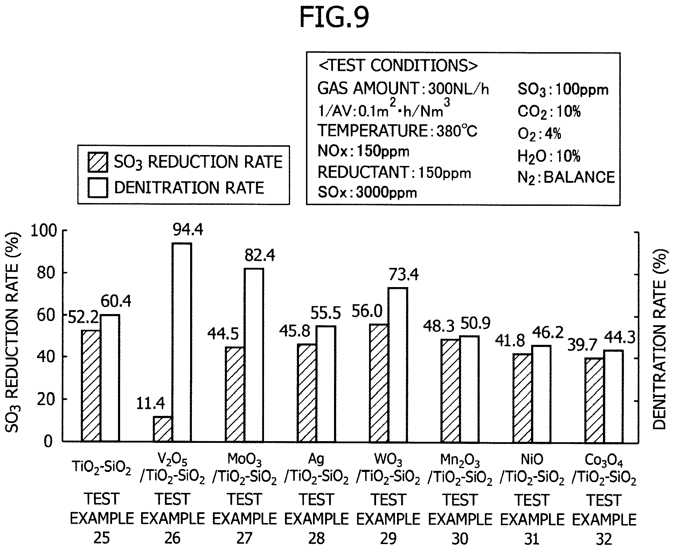

The capability of reducing $SO_3$ when propylene ($C_3H_6$) was used as the $SO_3$ reductant was examined for the respective Test Examples. Similarly to Example 2, the $SO_3$ reductant was added to the combustion flue gas, and the combustion flue gas including the $SO_3$ reductant was allowed to flow through the catalyst layer using the $SO_3$ catalyst installed in the denitration and $SO_3$ reduction apparatus, and thereby variation of the concentration of $SO_3$ before and after the combustion flue gas had flowed through the catalyst layer was examined. The test results and the test conditions are shown in FIG. 9.

FIG. 9 shows the $SO_3$ reduction rate (%) and the denitration rate (%) at $0.1 m^2 \cdot h/Nm^3$ in Test Examples 24 to 32. Referring to FIG. 9, the $SO_3$ reduction rate of Test Example 25 was 52.2%. On the other hand, the $SO_3$ reduction rate of Test Example 26 was 11.4%, the $SO_3$ reduction rate of Test Example 27 was 44.5%, and the $SO_3$ reduction rate of Test Example 28 was 45.8%. The $SO_3$ reduction rate of Test Example 29 was 56.0%, the $SO_3$ reduction rate of Test Example 30 was 48.3%, the $SO_3$ reduction rate of Test Example 31 was 41.8%, and the $SO_3$ reduction rate of Test Example 32 was 39.7%.

The denitration rate of Test Example 25 was 60.4%. On the other hand, the denitration rate of Test Example 26 was 94.4%, the denitration rate of Test Example 27 was 82.4%, the denitration rate of Test Example 28 was 55.5%, the denitration rate of Test Example 29 was 73.4%, the denitration rate of Test Example 30 was 50.9%, the denitration rate of Test Example 31 was 46.2%, and the denitration rate of Test Example 32 was 44.3%.

From these results, it was verified that the $SO_3$ reduction effect and the denitration effect could be obtained by using $C_3H_6$ as the $SO_3$ reductant for all Test Examples in which $V_2O_5$, $MoO_3$, Ag, $WO_3$, $Mn_2O_3$, $MnO_2$, NiO, or $Co_3O_4$ was carried. In Test Examples 27 to 32 in which $MoO_3$, Ag, $WO_3$, $Mn_2O_3$, $MnO_2$, NiO, or $Co_3O_4$ was carried, a high $SO_3$ reduction effect was observed. The $SO_3$ reduction effect and the denitration effect were observed particularly in Test Example 29 among them, in which $WO_3$ was carried. From this result, it was found that a catalyst impregnated with $WO_3$ was effective.

[Example 5]

A catalyst having yet another composition was prepared and both the $SO_3$ reduction capability and the denitration capability were evaluated.

(Preparation of Test Examples 33 to 37)

A catalyst I, in which $V_2O_5$-$WO_3$ was carried on $TiO_2$, was prepared in a similar manner as the case of preparing the catalyst B except that 0.3 wt.% $V_2O_5$ was carried by using ammonium metavanadate and 9 wt.% $WO_3$ was simultaneously carried by using ammonium paratungstate, per 100 wt.% of complex oxide, and the catalyst I was used as Test Example 33.

A catalyst J, in which $V_2O_5$-$WO_3$ was carried on a $TiO_2$-$SiO_2$ complex oxide, was prepared in a similar manner as the case of preparing the catalyst B except that 0.3 wt.% V205 was carried and 9 wt.% $WO_3$ was simultaneously carried, per 100 wt.% of complex oxide, and the catalyst J was used as Test Example 33. The catalyst J was coated with metallosilicate at 25 $g/m^2$ to obtain a catalyst K, and the obtained catalyst K was used as Test Example 35. The catalyst B was used as Test Example 36. A catalyst L, in which $V_2O_5$-$WO_3$ was carried on $TiO_2$, was prepared in a similar manner as the case of preparing the catalyst B except that 0.7 wt.% $V_2O_5$ was carried and 9 wt.% $WO_3$ was simultaneously carried, per 100 wt.% of complex oxide, and the catalyst L was used as Test Example 37. Figure 3 shows the composition of the respective Test Examples.

[Table 3]

Table 3 - Test Example Composition 3

| | Catalyst composition | | |
|---|---|---|---|
| | Coating layer | Active Component | Carrier |
| Test Example 33 | - | $V_2O_5$-$WO_3$ | $TiO_2$ |
| Test Example 34 | - | $V_2O_5$-$WO_3$ | $TiO_2$-$SiO_2$ |
| Test Example 35 | Metallosilicate | $V_2O_5$-$WO_3$ | $TiO_2$-$SiO_2$ |
| Test Example 36 | - | $WO_3$ | $TiO_2$ |
| Test Example 37 | - | $WO_3$ | $TiO_2$-$SiO_2$ |

($SO_3$ removal test VI)

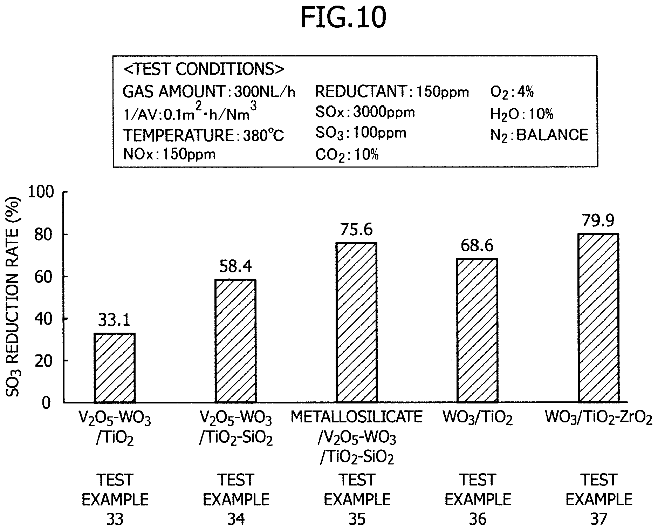

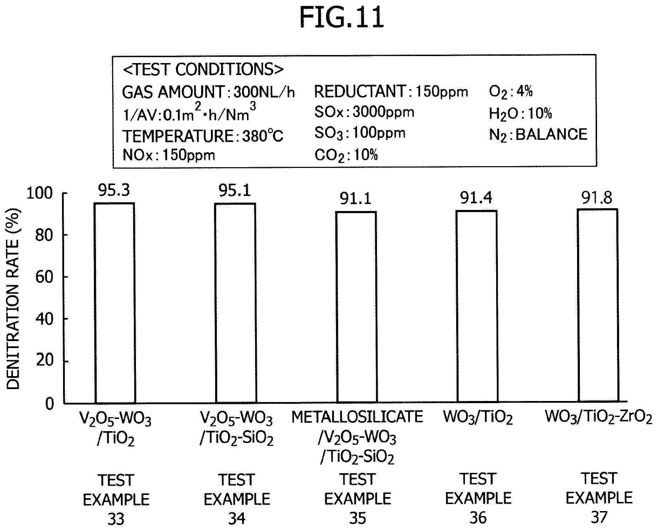

The capability of reducing $SO_3$ when propylene ($C_3H_6$) was used as the $SO_3$ reductant was examined for the respective Test Examples. Similarly to Example 2, the $SO_3$ reductant was added to the combustion flue gas, and the combustion flue gas including the $SO_3$ reductant was allowed to flow through the catalyst layer using the $SO_3$ catalyst installed in the denitration and $SO_3$ reduction apparatus, and thereby variation of the concentration of $SO_3$ before and after the combustion flue gas had flowed through the catalyst layer and the denitration rate were examined. The test results and the test conditions are shown in FIGs. 10 and 11.

FIG. 10 shows the $SO_3$ reduction rate (%) at 0.1 (1/AV: $m^2 \cdot h/Nm^3$) in Test Examples 33 to 37. Referring to FIG. 10, the $SO_3$ reduction rate of Test Example 33 was 33.3%. On the other hand, the $SO_3$ reduction rate of Test Example 34 was 58.4%, the $SO_3$ reduction rate of Test Example 35 was 75.6%, the $SO_3$ reduction rate of Test Example 36 was 68.6%, and the $SO_3$ reduction rate of Test Example 37 was 79.9%.

FIG. 11 shows the rate of denitration (%) from the combustion flue gas at 0.10 (1/AV: $m^2 \cdot h/Nm^3$) in Test Examples 33 to 37. Referring to FIG. 11, the denitration rate of Test Example 33 was 95.3%, the denitration rate of Test Example 34 was 95.1%, the denitration rate of Test Example 35 was 91.1%, the denitration rate of Test Example 36 was 91.4%, and the denitration rate of Test Example 37 was 91.8%.

From these results, it was found that in all these Test Examples, both the high $SO_3$ reduction capability and the high denitration capability could be obtained. In addition, in Test Examples 34 to 37, a high performance of reducing $SO_3$ to $SO_2$ higher than that of Test Example 33 was observed as expected.

Industrial Applicability

According to the flue gas treatment method and the denitration and $SO_3$ reduction apparatus of the present invention, it is made possible to denitrate $NO_x$ in the combustion flue gas and reduce the concentration of $SO_3$ in the combustion flue gas at the same time at treatment costs lower than those conventionally.

Reference Signs List

1　　　　　Furnace
2　　　　　Flue gas chimney
3　　　　　ECO
4　　　　　ECO bypass
5, 15, 25　Denitration and $SO_3$ reduction apparatus
6, 16, 26　First injection device
7, 17, 27　Second injection device

| 8 | Catalyst layer |
|---|---|
| 18, 28 | First catalyst layer |
| 19, 29 | Second catalyst layer |

**Claims**

1.  A flue gas treatment method comprising the steps of:

    adding a 3C-5C olefinic hydrocarbon (unsaturated hydrocarbon) to a combustion flue gas including $SO_3$ as well as $NO_x$ as a first additive; and then,
    bringing the combustion flue gas into contact with a catalyst which includes an oxide constituted by one or more of elements selected from the group consisting of Ti, Si, Zr, and Ce and/or a mixed oxide and/or a complex oxide constituted by two or more of elements selected from the group as a carrier and which does not include a noble metal, and thereby $SO_3$ is treated by reduction into $SO_2$.

2.  The flue gas treatment method according to Claim 1, wherein the 3C-5C olefinic hydrocarbon (unsaturated hydrocarbon) is one or more selected from the group consisting of $C_3H_6$, $C_4H_8$ and $C_5H_{10}$.

3.  The flue gas treatment method according to Claim 2, wherein the $C_4H_8$ is in the form of a geometric isomer or a racemic body, or/and the $C_5H_{10}$ is in the form of a geometric isomer or a racemic body.

4.  The flue gas treatment method according to any one of Claims 1 to 3, wherein the carrier includes a mixed oxide and/or a complex oxide including one or more selected from the group consisting of $TiO_2$-$SiO_2$, $TiO_2$-$ZrO_2$, and $TiO_2$-$CeO_2$.

5.  The flue gas treatment method according to any one of Claims 1 to 4, wherein the catalyst is a catalyst in which a metal oxide including one or more selected from the group consisting of $V_2O_5$, $WO_3$, $MoO_3$, $Mn_2O_3$, $MnO_2$, NiO, and $Co_3O_4$ is carried on the complex oxide as the carrier.

6.  The flue gas treatment method according to Claim 5, wherein a metallosilicate-base complex oxide, in which at least a part of Al and/or Si in a zeolite crystal structure is substituted with one or more selected from the group consisting of Ti, V, Mn, Fe, and Co, is coated onto the catalyst.

7.  The flue gas treatment method according to any one of Claims 1 to 6, wherein a treatment for reducing $SO_3$ into $SO_2$ is performed in a temperature range of 250ºC to 450ºC.

8.  The flue gas treatment method according to Claim 7, wherein a treatment for reducing $SO_3$ into $SO_2$ is performed in a temperature range of 300ºC to 400ºC.

9.  An $SO_3$ reduction apparatus (5, 15, 25) for performing denitration of $NO_x$ and reduction of $SO_3$ in a combustion flue gas including $NO_x$ and $SO_3$, the apparatus comprising:

    a first injection device (6, 16, 26) that is configured for adding a 3C-5C olefinic hydrocarbon (unsaturated hydrocarbon) to the combustion flue gas;
    a second injection device (7, 17, 27) that is arranged close to the first injection device (6, 16, 26) and that is configured for adding $NH_3$ to the combustion flue gas; and
    a catalyst layer (8, 18, 19, 28, 29) including a catalyst through which the combustion flue gas is allowed to flow, wherein the $SO_3$ reduction apparatus (5, 15, 25) is configured for simultaneously performing denitration of $NO_x$ and reduction of $SO_3$ to $SO_2$ in the combustion flue gas and comprises one of the following configurations (a) and (b):

    (a) the first injection device (6) and the second injection device (7) are arranged on a front stream side of the catalyst layer (8), or
    (b) the catalyst layer (18, 19, 28, 29) includes a first catalyst layer (18, 28) that is arranged on a back stream side of the first injection device (16, 26) and that is configured for reducing the concentration of $SO_3$, and a second catalyst layer (19, 29) that is arranged on a back stream side of the second injection device (17, 27) and that is configured for performing denitration, wherein:

(b1) the first catalyst layer (18) is arranged on a back stream side of the second catalyst layer (19), the first injection device (16) is arranged on a front stream side of the first catalyst layer (18) and on a back stream side of the second catalyst layer (19), and the second injection device (17) is arranged on a front stream side of the second catalyst layer (19), or

(b2) the first catalyst layer (28) is arranged on a front stream side of the second catalyst layer (29), the first injection device (26) is arranged on a front stream side of the first catalyst layer (26) and on a front stream side of the second catalyst layer (29), and the second injection device (27) is arranged on a front stream side of the second catalyst layer (29),

and wherein the catalyst of the catalyst layer (8) or of the first catalyst layer (18, 28) does not include a noble metal and includes an oxide including one or more of elements selected from the group consisting of Ti, Si, Zr, and Ce and/or a mixed oxide and/or a complex oxide including two or more of elements selected from the group as a carrier.

10. The $SO_3$ reduction apparatus according to Claim 9, wherein the first injection device (6, 16, 26) is configured for adding one or more selected from the group consisting of $C_3H_6$, $C_4H_8$ and $C_5H_{10}$ to the combustion flue gas.

11. The $SO_3$ reduction apparatus according to Claim 10, wherein the first injection device (6, 16, 26) is configured for adding $C_4H_8$ in the form of a geometric isomer or a racemic body to the combustion flue gas, or/and for adding $C_5H_{10}$ in the form of a geometric isomer or a racemic body to the combustion flue gas.

12. The $SO_3$ reduction apparatus according to any one of Claims 9 to 11, wherein the carrier includes a mixed oxide and/or a complex oxide including one or more selected from the group consisting of $TiO_2$-$SiO_2$, $TiO_2$-$ZrO_2$, and $TiO_2$-$CeO_2$.

13. The $SO_3$ reduction apparatus according to any one of Claims 9 to 12, wherein the catalyst is a catalyst in which a metal oxide including one or more selected from the group consisting of $V_2O_5$, $WO_3$, $MoO_3$, $Mn_2O_3$, $MnO_2$, NiO, and $Co_3O_4$ is carried on the complex oxide as the carrier.

14. The $SO_3$ reduction apparatus according to Claim 9, wherein the catalyst of the second catalyst layer (19, 29) does not include the noble metal and includes an oxide including one or more of elements selected from the group consisting of Ti, Si, Zr, and Ce and/or a mixed oxide and/or a complex oxide including two or more of elements selected from the group as a carrier.

**Patentansprüche**

1. Abgasbehandlungsverfahren, umfassend die Schritte:

Hinzufügen eines olefinischen 3C-5C-Kohlenwasserstoffs (ungesättigten Kohlenwasserstoffs) als erstes Additiv zu einem $SO_3$ sowie $NO_x$ beinhaltenden Verbrennungsabgas; und anschließend, Inkontaktbringen des Verbrennungsabgases mit einem Katalysator, welcher ein aus einem oder mehreren Elementen ausgewählt aus der Gruppe bestehend aus Ti, Si, Zr und Ce bestehendes Oxid und/oder ein aus zwei oder mehreren Elementen ausgewählt aus der Gruppe bestehendes Mischoxid und/oder komplexes Oxid als Träger umfasst und welcher kein Edelmetall umfasst, wodurch $SO_3$ zu $SO_2$ reduziert wird.

2. Abgasbehandlungsverfahren nach Anspruch 1, wobei es sich bei dem olefinischen 3C-5C-Kohlenwasserstoff (ungesättigten Kohlenwasserstoff) um eines oder mehrere ausgewählt aus der Gruppe bestehend aus $C_3H_6$, $C_4H_8$ und $C_5H_{10}$ handelt.

3. Abgasbehandlungsverfahren nach Anspruch 2, wobei das $C_4H_8$ in Form eines geometrischen Isomers oder eines racemischen Körpers vorliegt, oder/und das $C_5H_{10}$ in Form eines geometrischen Isomers oder eines racemischen Körpers vorliegt.

4. Abgasbehandlungsverfahren nach einem der Ansprüche 1 bis 3, wobei der Träger ein eines oder mehrere ausgewählt aus der Gruppe bestehend aus $TiO_2$-$SiO_2$, $TiO_2$-$ZrO_2$ und $TiO_2$-$CeO_2$ umfassendes Mischoxid und/oder komplexes Oxid umfasst.

**5.** Abgasbehandlungsverfahren nach einem der Ansprüche 1 bis 4, wobei es sich bei dem Katalysator um einen Katalysator handelt, in welchem ein eines oder mehrere ausgewählt aus der Gruppe bestehend aus $V_2O_5$, $WO_3$, $MoO_3$, $Mn_2O_3$, $MnO_2$, NiO und $Co_3O_4$ umfassendes Metalloxid auf dem als Träger fungierenden komplexen Oxid geträgert ist.

**6.** Abgasbehandlungsverfahren nach Anspruch 5, wobei ein Metallsilikat-basiertes komplexes Oxid, in welchem zumindest ein Teil von A1 und/oder Si in einer Zeolith-Kristallstruktur durch eines oder mehrere ausgewählt aus der Gruppe bestehend aus Ti, V, Mn, Fe und Co substituiert ist, auf den Katalysator aufgebracht ist.

**7.** Abgasbehandlungsverfahren nach einem der Ansprüche 1 bis 6, wobei die Behandlung für die Reduktion von $SO_3$ zu $SO_2$ in einem Temperaturbereich von 250°C bis 450°C durchgeführt wird.

**8.** Abgasbehandlungsverfahren nach Anspruch 7, wobei die Behandlung für die Reduktion von $SO_3$ zu $SO_2$ in einem Temperaturbereich von 300°C bis 400°C durchgeführt wird.

**9.** $SO_3$-Reduktionsvorrichtung (5, 15, 25) für die Denitrierung von $NO_x$ und die Reduktion von $SO_3$ in einem $NO_x$ und $SO_3$ umfassenden Verbrennungsabgas, wobei die Vorrichtung umfasst:

eine erste Injektionsvorrichtung (6, 16, 26), welche dazu ausgelegt ist, einen olefinischen 3C-5C-Kohenwasserstoff (ungesättigten Kohlenwasserstoff) zu dem Verbrennungsabgas hinzuzufügen;
eine zweite Injektionsvorrichtung (7, 17, 27), welche in der Nähe der ersten Injektionsvorrichtung (6, 16, 26) angeordnet ist und welche dazu ausgelegt ist, $NH_3$ zu dem Verbrennungsabgas hinzuzufügen; und
eine Katalysatorschicht (8, 18, 19, 28, 29), welche einen Katalysator umfasst, durch den das Verbrennungsabgas hindurchströmen darf,
wobei die $SO_3$-Reduktionsvorrichtung (5, 15, 25) dazu ausgelegt ist, in dem Verbrennungsabgas gleichzeitig eine Denitrierung von $NO_x$ und eine Reduktion von $SO_3$ zu $SO_2$ zu bewirken und eine der nachfolgenden Konfigurationen (a) und (b) umfasst:

(a) die erste Injektionsvorrichtung (6) und die zweite Injektionsvorrichtung (7) sind stromaufwärts der Katalysatorschicht (8) angeordnet, oder
(b) die Katalysatorschicht (18, 19, 28, 29) umfasst eine erste Katalysatorschicht (18, 28), welche stromabwärts der ersten Injektionsvorrichtung (16, 26) angeordnet ist und welche dazu ausgelegt ist, die Konzentration an $SO_3$ zu verringern, und eine zweite Katalysatorschicht (19, 29), welche stromabwärts der zweiten Injektionsvorrichtung (17, 27) angeordnet ist und welche dazu ausgelegt ist, eine Denitrierung zu bewirken, wobei:

(b1) die erste Katalysatorschicht (18) stromabwärts der zweiten Katalysatorschicht (19) angeordnet ist, die erste Injektionsvorrichtung (16) stromaufwärts der ersten Katalysatorschicht (18) und stromabwärts der zweiten Katalysatorschicht (19) angeordnet ist, und die zweite Injektionsvorrichtung (17) stromaufwärts der zweiten Katalysatorschicht (19) angeordnet ist, oder
(b2) die erste Katalysatorschicht (28) stromabwärts der zweiten Katalysatorschicht (29) angeordnet ist, die erste Injektionsvorrichtung (26) stromaufwärts der ersten Katalysatorschicht (26) und stromaufwärts der zweiten Katalysatorschicht (29) angeordnet ist, und die zweite Injektionsvorrichtung (27) stromaufwärts der zweiten Katalysatorschicht (29) angeordnet ist,

und wobei der Katalysator der Katalysatorschicht (8) oder der ersten Katalysatorschicht (18, 28) kein Edelmetall umfasst und ein eines oder mehrere Elemente ausgewählt aus der Gruppe bestehend aus Ti, Si, Zr und Ce umfassendes Oxid und/oder ein zwei oder mehrere Elemente ausgewählt aus der Gruppe umfassendes Mischoxid und/oder komplexes Oxid als Träger umfasst.

**10.** $SO_3$-Reduktionsvorrichtung nach Anspruch 9, wobei die erste Injektionsvorrichtung (6, 16, 26) dazu ausgelegt ist, eines oder mehrere ausgewählt aus der Gruppe bestehend aus $C_3H_6$, $C_4H_8$ und $C_5H_{10}$ zu dem Verbrennungsabgas hinzuzufügen.

**11.** $SO_3$-Reduktionsvorrichtung nach Anspruch 10, wobei die erste Injektionsvorrichtung (6, 16, 26) dazu ausgelegt ist, $C_4H_8$ in Form eines geometrischen Isomers oder eines racemischen Körpers zu dem Verbrennungsabgas hinzuzufügen, oder/und $C_5H_{10}$ in Form eines geometrischen Isomers oder eines racemischen Körpers zu dem Verbrennungsabgas hinzuzufügen.

**12.** SO$_3$-Reduktionsvorrichtung nach einem der Ansprüche 9 bis 11, wobei der Träger ein eines oder mehrere ausgewählt aus der Gruppe bestehend aus TiO$_2$-SiO$_2$, TiO$_2$-ZrO$_2$ und TiO$_2$-CeO$_2$ umfassendes Mischoxid und/oder komplexes Oxid umfasst.

**13.** SO$_3$-Reduktionsvorrichtung nach einem der Ansprüche 9 bis 12, wobei es sich bei dem Katalysator um einen Katalysator handelt, in welchem ein eines oder mehrere ausgewählt aus der Gruppe bestehend aus V$_2$O$_5$, WO$_3$, MoO$_3$, Mn$_2$O$_3$, MinO$_2$, NiO und Co$_3$O$_4$ umfassendes Metalloxid auf dem als Träger fungierenden komplexen Oxid geträgert ist.

**14.** SO$_3$-Reduktionsvorrichtung nach Anspruch 9, wobei der Katalysator der zweiten Katalysatorschicht (19, 29) das Edelmetall nicht umfasst und ein eines oder mehrere Elemente ausgewählt aus der Gruppe bestehend aus Ti, Si, Zr und Ce umfassendes Oxid und/oder ein zwei oder mehrere Elemente ausgewählt aus der Gruppe umfassendes Mischoxid und/oder komplexes Oxid als Träger umfasst.

**Revendications**

**1.** Procédé de traitement de gaz de fumée comprenant les étapes de :

ajout d'un hydrocarbure oléfinique en C3-C5 (hydrocarbure insaturé) à un gaz de fumée de combustion comprenant du SO$_3$ ainsi que du NO$_x$ en tant que premier additif ; puis,
mise en contact du gaz de fumée de combustion avec un catalyseur qui comprend un oxyde constitué par un ou plusieurs des éléments choisi(s) dans le groupe constitué par Ti, Si, Zr, et Ce et/ou un oxyde mixte et/ou un oxyde complexe constitué par deux ou plusieurs des éléments choisis dans le groupe en tant que support et qui ne comprend pas de métal noble, et ainsi le SO$_3$ est traité par réduction en SO$_2$.

**2.** Procédé de traitement de gaz de fumée selon la revendication 1, dans lequel l'hydrocarbure oléfinique en C3-C5 (hydrocarbure insaturé) est un ou plusieurs choisi (s) dans le groupe constitué par C$_3$H$_6$, C$_4$H$_8$, et C$_5$H$_{10}$.

**3.** Procédé de traitement de gaz de fumée selon la revendication 2, dans lequel le C$_4$H$_8$ est sous la forme d'un isomère géométrique ou d'un mélange racémique, et/ou le C$_5$H$_{10}$ est sous la forme d'un isomère géométrique ou d'un mélange racémique.

**4.** Procédé de traitement de gaz de fumée selon l'une quelconque des revendications 1 à 3, dans lequel le support comprend un oxyde mixte et/ou un oxyde complexe comprenant un ou plusieurs choisi(s) dans le groupe constitué par TiO$_2$-SiO$_2$, TiO$_2$-ZrO$_2$, et TiO$_2$-CeO$_2$.

**5.** Procédé de traitement de gaz de fumée selon l'une quelconque des revendications 1 à 4, dans lequel le catalyseur est un catalyseur dans lequel un oxyde de métal comprenant un ou plusieurs choisi(s) dans le groupe constitué par V$_2$O$_5$, WO$_3$, MoO$_3$, Mn$_2$O$_3$, MnO$_2$, NiO, et Co$_3$O$_4$ est supporté sur l'oxyde complexe en tant que support.

**6.** Procédé de traitement de gaz de fumée selon la revendication 5, dans lequel un oxyde complexe à base de métallosilicate, dans lequel au moins une partie de l'Al et/ou du Si dans une structure cristalline de zéolite est remplacée par un ou plusieurs choisi (s) dans le groupe constitué par Ti, V, Mn, Fe, et Co, revêt le catalyseur.

**7.** Procédé de traitement de gaz de fumée selon l'une quelconque des revendications 1 à 6, dans lequel un traitement de réduction du SO$_3$ en SO$_2$ est réalisé dans une plage de températures de 250 °C à 450 °C.

**8.** Procédé de traitement de gaz de fumée selon la revendication 7, dans lequel un traitement de réduction du SO$_3$ en SO$_2$ est réalisé dans une plage de températures de 300 °C à 400 °C.

**9.** Appareil de réduction du SO$_3$ (5, 15, 25) pour réaliser la dénitration des NO$_x$ et la réduction du SO$_3$ dans un gaz de fumée de combustion comprenant des NO$_x$ et du SO$_3$, l'appareil comprenant :

un premier dispositif d'injection (6, 16, 26) qui est configuré pour ajouter un hydrocarbure oléfinique en C3-C5 (hydrocarbure insaturé) au gaz de fumée de combustion,
un second dispositif d'injection (7, 17, 27) qui est disposé à proximité du premier dispositif d'injection (6, 16, 26) et qui est configuré pour ajouter du NH$_3$ au gaz de fumée de combustion ; et

une couche catalytique (8, 18, 19, 28, 29) comprenant un catalyseur à travers lequel le gaz de fumée de combustion peut s'écouler,

dans lequel l'appareil de réduction du $SO_3$ (5, 15, 25) est configuré pour réaliser simultanément la dénitration des $NO_x$ et la réduction du $SO_3$ en $SO_2$ dans le gaz de fumée de combustion et comprend l'une des configurations (a) et (b) suivantes :

(a) le premier dispositif d'injection (6) et le second dispositif d'injection (7) sont disposés sur une face d'écoulement avant de la couche catalytique (8), ou

(b) la couche catalytique (18, 19, 28, 29) comprend une première couche catalytique (18, 28) qui est disposée sur une face d'écoulement arrière du premier dispositif d'injection (16, 26) et qui est configurée pour réduire la concentration en $SO_3$, et une seconde couche catalytique (19, 29) qui est disposée sur une face d'écoulement arrière du second dispositif d'injection (17, 27) et qui est configurée pour réaliser une dénitration, dans lequel :

(b1) la première couche catalytique (18) est disposée sur une face d'écoulement arrière de la seconde couche catalytique (19), le premier dispositif d'injection (16) est disposé sur une face d'écoulement avant de la première couche catalytique (18) et sur une face d'écoulement arrière de la seconde couche catalytique (19), et le second dispositif d'injection (17) est disposé sur une face d'écoulement avant de la seconde couche catalytique (19), ou

(b2) la première couche catalytique (28) est disposée sur une face d'écoulement avant de la seconde couche catalytique (29), le premier dispositif d'injection (26) est disposé sur une face d'écoulement avant de la première couche catalytique (26) et sur une face d'écoulement avant de la seconde couche catalytique (29), et le second dispositif d'injection (27) est disposé sur une face d'écoulement avant de la seconde couche catalytique (29),

et dans lequel le catalyseur de la couche catalytique (8) ou de la première couche catalytique (18, 28) ne comprend pas de métal noble et comprend un oxyde comprenant un ou plusieurs des éléments choisi(s) dans le groupe constitué par Ti, Si, Zr et Ce et/ou un oxyde mixte et/ou un oxyde complexe comprenant deux ou plusieurs des éléments choisis dans le groupe en tant que support.

10. Appareil de réduction du $SO_3$ selon la revendication 9, dans lequel le premier dispositif d'injection (6, 16, 26) est configuré pour ajouter un ou plusieurs choisi (s) dans le groupe constitué par $C_3H_6$, $C_4H_8$ et $C_5H_{10}$ au gaz de fumée de combustion.

11. Appareil de réduction du $SO_3$ selon la revendication 10, dans lequel le premier dispositif d'injection (6, 16, 26) est configuré pour ajouter du $C_4H_8$ sous la forme d'un isomère géométrique ou d'un mélange racémique au gaz de fumée de combustion, et/ou pour ajouter du $C_5H_{10}$ sous la forme d'un isomère géométrique ou d'un mélange racémique au gaz de fumée de combustion.

12. Appareil de réduction du $SO_3$ selon l'une quelconque des revendications 9 à 11, dans lequel le support comprend un oxyde mixte et/ou un oxyde complexe comprenant un ou plusieurs choisi(s) dans le groupe constitué par $TiO_2$-$SiO_2$, $TiO_2$-$ZrO_2$, et $TiO_2$-$CeO_2$.

13. Appareil de réduction du $SO_3$ selon l'une quelconque des revendications 9 à 12, dans lequel le catalyseur est un catalyseur dans lequel un oxyde de métal comprenant un ou plusieurs choisi(s) dans le groupe constitué par $V_2O_5$, $WO_3$, $MoO_3$, $Mn_2O_3$, $MnO_2$, $NiO$, et $Co_3O_4$ est supporté sur l'oxyde complexe en tant que support.

14. Appareil de réduction du $SO_3$ selon la revendication 9, dans lequel le catalyseur de la seconde couche catalytique (19, 29) ne comprend pas le métal noble et comprend un oxyde comprenant un ou plusieurs éléments choisi(s) dans le groupe constitué par Ti, Si, Zr, et Ce et/ou un oxyde mixte et/ou un oxyde complexe comprenant deux ou plusieurs des éléments choisis dans le groupe en tant que support.

FIG.1

FIG.2

# FIG.3

# FIG.4

## FIG.5

<TEST CONDITIONS>
GAS AMOUNT : 300NL/h
TEMPERATURE : 380°C
NOx : 150ppm
REDUCTANT : 180ppm
SOx : 3000ppm
$SO_3$ : 100ppm
$CO_2$ : 10%
$O_2$ : 4%
$H_2O$ : 10%
$N_2$ : BALANCE

TEST EXAMPLE 6
TEST EXAMPLE 7
TEST EXAMPLE 8
TEST EXAMPLE 9
TEST EXAMPLE 10

$SO_3$ CONCENTRATION (ppm)

1/AV $(m^2 \cdot h/Nm^3)$

# FIG.6

<TEST CONDITIONS>

GAS AMOUNT: 300NL/h    REDUCTANT: 120ppm    $O_2$: 4%

1/AV: 0.80$m^2 \cdot$h/$Nm^3$    SOx: 3000ppm    $H_2O$: 10%

TEMPERATURE: 380°C    $SO_3$: 100ppm    $N_2$: BALANCE

NOx: 150ppm    $CO_2$: 10%

Legend: ▨ $SO_3$ REDUCTION RATE / ☐ DENITRATION RATE

$SO_3$ REDUCTION RATE (%) / DENITRATION RATE (%)

| | $CH_3OH$ TEST EXAMPLE 11 | $C_2H_5OH$ TEST EXAMPLE 12 | $C_3H_8$ TEST EXAMPLE 13 | $C_2H_4$ TEST EXAMPLE 14 | $C_3H_6$ TEST EXAMPLE 15 | 1-$C_4H_8$ TEST EXAMPLE 16 | 2-$C_4H_8$ TEST EXAMPLE 17 | iso-$C_4H_8$ TEST EXAMPLE 18 |
|---|---|---|---|---|---|---|---|---|
| $SO_3$ reduction rate | 5.0 | 6.0 | 10.0 | 20.0 | 58.0 | 50.2 | 54.2 | 63.5 |
| Denitration rate | 92.6 | 93.2 | 94.1 | 94.0 | 95.1 | 92.1 | 92.3 | 91.8 |

EP 3 045 220 B1

# FIG.7

SO₃ REDUCTION RATE (%)

DENITRATION RATE (%)

| | SO₃ REDUCTION RATE |
| | DENITRATION RATE |

<TEST CONDITIONS>
GAS AMOUNT : 300NL/h     SO₃ : 100ppm
1/AV : 0.80m²·h/Nm³       CO₂ : 10%
TEMPERATURE : 380°C      O₂ : 4%
NOx : 150ppm              H₂O : 10%
REDUCTANT : 150ppm       N₂ : BALANCE
SOx : 3000ppm

TiO₂ TEST EXAMPLE 19 — 16.5 / 32.8
TiO₂-SiO₂ TEST EXAMPLE 20 — 52.2 / 60.4
TiO₂-ZrO₂ TEST EXAMPLE 21 — 47.3 / 39.3
TiO₂-Ce₂O₃ TEST EXAMPLE 22 — 46.6 / 42.3
ZrO₂ TEST EXAMPLE 23 — 23.1 / 6.7
CeO₂ TEST EXAMPLE 24 — 11.1 / 19.1

FIG.8

EP 3 045 220 B1

# FIG.9

<TEST CONDITIONS>
GAS AMOUNT : 300NL/h    $SO_3$ : 100ppm
1/AV : $0.1m^2 \cdot h/Nm^3$    $CO_2$ : 10%
TEMPERATURE : 380°C    $O_2$ : 4%
NOx : 150ppm    $H_2O$ : 10%
REDUCTANT : 150ppm    $N_2$ : BALANCE
SOx : 3000ppm

| | $SO_3$ REDUCTION RATE |
| | DENITRATION RATE |

Bar chart — SO₃ REDUCTION RATE (%) vs DENITRATION RATE (%):

- $TiO_2$-$SiO_2$ — TEST EXAMPLE 25: 52.2, 60.4
- $V_2O_5$ /$TiO_2$-$SiO_2$ — TEST EXAMPLE 26: 11.4, 94.4
- $MoO_3$ /$TiO_2$-$SiO_2$ — TEST EXAMPLE 27: 44.5, 82.4
- Ag /$TiO_2$-$SiO_2$ — TEST EXAMPLE 28: 45.8, 55.5
- $WO_3$ /$TiO_2$-$SiO_2$ — TEST EXAMPLE 29: 56.0, 73.4
- $Mn_2O_3$ /$TiO_2$-$SiO_2$ — TEST EXAMPLE 30: 48.3, 50.9
- NiO /$TiO_2$-$SiO_2$ — TEST EXAMPLE 31: 41.8, 46.2
- $Co_3O_4$ /$TiO_2$-$SiO_2$ — TEST EXAMPLE 32: 39.7, 44.3

# FIG.10

EP 3 045 220 B1

<TEST CONDITIONS>

| | | |
|---|---|---|
| GAS AMOUNT:300NL/h | REDUCTANT:150ppm | $O_2$:4% |
| 1/AV:0.1$m^2 \cdot$h/$Nm^3$ | SOx:3000ppm | $H_2O$:10% |
| TEMPERATURE:380°C | $SO_3$:100ppm | $N_2$:BALANCE |
| NOx:150ppm | $CO_2$:10% | |

# FIG.11

<TEST CONDITIONS>
GAS AMOUNT : 300NL/h    REDUCTANT : 150ppm    $O_2$ : 4%
1/AV : 0.1$m^2$·h/$Nm^3$    SOx : 3000ppm    $H_2O$ : 10%
TEMPERATURE : 380°C    $SO_3$ : 100ppm    $N_2$ : BALANCE
NOx : 150ppm    $CO_2$ : 10%

| | 95.3 | 95.1 | 91.1 | 91.4 | 91.8 |
| DENITRATION RATE (%) | $V_2O_5$-$WO_3$ /$TiO_2$ | $V_2O_5$-$WO_3$ /$TiO_2$-$SiO_2$ | METALLOSILICATE /$V_2O_5$-$WO_3$ /$TiO_2$-$SiO_2$ | $WO_3$/$TiO_2$ | $WO_3$/$TiO_2$-$ZrO_2$ |
| | TEST EXAMPLE 33 | TEST EXAMPLE 34 | TEST EXAMPLE 35 | TEST EXAMPLE 36 | TEST EXAMPLE 37 |

**EP 3 045 220 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3495591 B
- JP 3495527 B
- EP 1452222 A1
- US 4221768 A
- US 2014018231 A1
- DE 2811788 A1